# EUROPEAN PATENT APPLICATION

(11) **EP 4 485 102 A1**
(43) Date of publication of application: **01.01.2025**
(21) Application number: 23181535.8
(22) Date of filing: 26.06.2023
(51) Int. Cl.: G05B 19/18, B31F 1/07, G06K 15/02, G06K 19/06

(54) **A METHOD FOR MANUFACTURING AN EMBOSSING TOOL WITH A CODE-CONTAINING TOPOGRAPHY**

(71) Applicant: Boegli-Gravures SA, 2074 Marin-Epagnier (CH)
(72) Inventor: BOEGLI, Charles, 2074 Marin-Epagnier (CH); DUMITRU, Gabriel, 5415 Nussbaumen (CH)
(74) Representative: Weihs, Bruno Konrad

(57) **Abstract**

A method for manufacturing an embossing tool with a code-containing topography that comprises a plurality of surface structures on the embossing tool surface, comprising providing an image file of the image containing a raster of image pixels with a determined bit depth and an initial image resolution, transforming the image file into a primary raster of image pixels with the determined resolution, providing a code raster of image pixels for the alphanumerical or graphical code, applying a first logical operation to combine the code raster of image pixels and the primary raster of image pixels in order to obtain a first image raster of image pixels as a result. The method further comprises applying a second logical operation to combine the first image raster of image pixels and the code raster of image pixels in order to obtain a second image raster of image pixels). The code raster of image pixels, the first image raster of image pixels and the second image raster of image pixels respectively comprise pixels of bit depth 1, wherein for each raster, a "1"-state of the pixel indicates that a raster-specific surface structure for that raster is to be planned in the topography for a location on the embossing tool surface corresponding to a position (m,n) of the image pixel in the raster, whereas a "0"-state of the pixel indicates that no raster-specific surface structure for that raster is to be planned in the topography for a further location on the embossing tool surface corresponding to a further position of the image pixel in the raster. The method further comprises projecting the code raster of image pixels, the first image raster of image pixels and the second image raster of image pixels onto the embossing tool surface to obtain the topography raster of the locations on the embossing tool surface for the raster specific surface structures, and engraving on the embossing tool surface the raster specific surface structures at their respective obtained locations and hence obtain the code containing topography.

## Description

### Technical field

The invention relates to the manufacturing of an embossing tool with a code-containing topography. More specifically the code-containing topography is obtained from providing an alphanumeric or graphical information in a code raster, processing an image into a plurality of image rasters of "1"s and "0"s, and projecting these to an embossing tool surface structure raster, which is used as a plan for engraving surface structures of the code-containing topography.

### Background

International publication WO 98/23979 relates to an anti-counterfeiting proof reproduction of color images on various surfaces, such as for example bank notes, such reproduction being referenced as a diffractive device. In such diffractive device, the observed diffraction image is composed of pixels of numerous different colors, with the hue and intensity of most pixels being similar to those of immediately adjacent pixels so that the image has a substantially continuous smooth color tone, and each combination of hue and intensity is generated by the combined diffractive effect of the physical characteristics of one or more regions of the surface relief structure. The security of such technology is based on the reproduction of a color image that can be viewed using appropriate light and viewing angles. It is described how a color image may be decomposed into three separate grey scale images corresponding respectively to red, green, and blue, and how those grey scale images are converted into palettes of different color intensities, resulting in a monochrome red component image, a monochrome green component image, and a monochrome blue component image. The transfer of the structures for the component images may be through corresponding grating palettes that are transferred by means of an electron beam lithography machine, followed by a number of treatments and eventually by an embossing of a master shim onto foil.

European publication EP 2 946 341 B1 relates to a method for dissimulating a code amidst color patterns by means of printing, whereby the code pattern is provided in at least one of the color patterns. The code patterns distinguish over other color patterns by parameters reflecting technical characteristics of the printing process with which the patterns are respectively to be printed.

A problem addressed by the invention is that of finding an alternative to this prior art to combine an alphanumerical of image code in an image which is adapted for embossing.

### Summary of invention

In a first aspect, the invention provides a method for manufacturing an embossing tool with a code-containing topography, whereby the topography is configured to represent a combination of an image and an alphanumerical or graphical information, the topography comprising a plurality of surface structures distributed according to a topography raster having a determined resolution, on the embossing tool surface. The method comprises providing an image file of the image containing a raster of image pixels with a determined bit depth and an initial image resolution, transforming the image file into a primary raster of image pixels with the determined resolution, wherein a bit depth of an image pixel in the primary raster of image pixels is 1, providing a code raster of image pixels for the alphanumerical or graphical information, the code raster being made from code features of contiguous pixels in "1" state, the contiguous pixels being surrounded by pixels in "0" state, with a bit depth 1 and with the determined resolution, applying a first logical operation to combine the code raster of image pixels and the primary raster of image pixels in order to obtain a first image raster of image pixels as a result, whereby the first logical operation is defined by:

```
    StateOfPixelFromlstlmageRaster (m,n) = StateOfPixelFromPrimarylmageRaster (m,n) AND (NOT(
        StateOfPixelFromCodeRaster (m.n) )),
```

whereby m and n are lines and column indices referencing a pixel in the raster of images pixels. The method further comprises applying a second logical operation to combine the first image raster of image pixels and the code raster of image pixels in order to obtain a second image raster of image pixels, whereby the second logical operation is defined by:

```
    StateOfPixelFrom2ndlmageRaster (m,n) = NOT( StateOfPixelFromlstlmageRaster (m,n) OR
        StateOf Pixe FromCode Raster (m,n)),
```

whereby the code raster of image pixels, the first image raster of image pixels and the second image raster of image pixels respectively comprise pixels of bit depth 1, wherein for each raster, a "1"-state of the pixel indicates that a raster-specific surface structure for that raster is to be planned in the topography for a location on the embossing tool surface corresponding to a position (m,n) of the image pixel in the raster, whereas a "0"-state of the pixel indicates that no raster-specific surface structure for that raster is to be planned in the topography for a further location on the embossing tool surface corresponding to a further position of the image pixel in the raster. The method further comprises projecting the code raster of image pixels, the first image raster of image pixels and the second image raster of image pixels onto the embossing tool surface to obtain the topography raster of the locations on the embossing tool surface for the raster specific surface structures, and engraving on the embossing tool surface the raster specific surface structures at their respective obtained locations and hence obtain the code containing topography.

In a further aspect the invention provides a method for manufacturing an embossing tool with a code-containing topography, whereby the topography is configured to represent a combination of an image and an alphanumerical or graphical information, the topography comprising a plurality of surface structures distributed according to a topography raster having a determined resolution, on the embossing tool surface. The method comprises providing an image file of the image containing a raster of image pixels with a determined bit depth and an initial image resolution, transforming the image file into a primary raster of image pixels with the determined resolution, wherein a bit depth of an image pixel in the primary raster of image pixels is 1, providing a code raster of image pixels for the alphanumerical or graphical information, the code raster being made from code features of contiguous pixels in "1" state, the contiguous pixels being surrounded by pixels in "0" state, with a bit depth 1 and with the determined resolution, applying a first logical operation to combine the code raster of image pixels and the primary raster of image pixels in order to obtain a first image raster of image pixels as a result, whereby the first logical operation (500) is defined by:

```
    StateOfPixelFromlstlmageRaster (m,n) = StateOfPixelFromPrimarylmageRaster (m,n) AND (NOT(
        StateOfPixelFromCodeRaster (m.n) )),
```

whereby m and n are lines and column indices referencing a pixel in the raster of images pixels. The method further comprises applying a first translation to the first image raster of image pixels in order to obtain a primary third image raster of image pixels, whereby the first translation is defined by a first translation equation:

```
    StateOfPixelOfPrimaryThirdlmageRaster (m,n) = StateOfPixelFromlstlmageRaster (m-a,n-b)
```

a and b corresponding to a translation vector in the raster, the first translation equation being applied when m-a or n-b respectively correspond to indices of a pixel that is inside a range of the raster under consideration for the first translation, and
StateOfPixelOfPrimaryThirdlmageRaster (m,n) = 0 if m-a or n-b respectively correspond to indices of a pixel that are out of a range of the raster under consideration for the translation.

The method further comprises applying a third logical operation (1101) to combine the code raster of image pixels (401), the first raster of image pixels (501) and the primary third image raster of image pixels (1103) to obtain a third raster of image pixels (1102), whereby the third logical operation (1101) is defined by:

```
    StateOfPixelFrom3rdlmageRaster (m,n) = StateOfPixelFromPrimary3rdlmageRaster (m,n) AND
        (NOT( StateOfPixelFromCodeRaster (m.n) AND StateOfPixelFromlstlmageRaster (m,n) ))
```

The method further comprises applying a fourth logical operation (1301) to combine the code raster of image pixels (401), the first raster of image pixels (501) and the third image raster of image pixels (1102) to obtain a fourth raster of image pixels (1302), whereby the fourth logical operation (1302) is defined by:

```
    StateOfPixelFrom4thlmageRaster (m,n) = NOT( StateOfPixelFromCodeRaster (m,n) OR
        StateOfPixelFromlstlmageRaster (m,n) OR StateOfPixelFrom3rdlmageRaster (m,n))
```

whereby the code raster of image pixels, the first image raster of image pixels, the third raster of image pixels and the fourth image raster of image pixels respectively comprise pixels of bit depth 1, wherein for each raster, a "1"-state of the pixel indicates that a raster-specific surface structure for that raster is to be planned in the topography for a location on the embossing tool surface corresponding to a position (m,n) of the image pixel in the raster, whereas a "0"-state of the pixel indicates that no raster-specific surface structure for that raster is to be planned in the topography for a further location on the embossing tool surface corresponding to a further position of the image pixel in the raster. The method further comprises projecting the code raster of image pixels, the first image raster of image pixels, the third image raster of image pixels and the fourth image raster of image pixels onto the embossing tool surface to obtain the topography raster of the locations on the embossing tool surface for the raster specific surface structures, and engraving on the engraving tool surface the raster specific surface structures at their respective obtained locations and hence obtain the code containing topography.

In a preferred embodiment the method further comprising after the first translation, at least steps of applying at least a further translation and at least a further logical operation to obtain an (2i+1)-th image raster of image pixels and an (2i+2)-th image raster of image pixels by applying a general rule as follow, whereby "i" corresponds to the number of an i-th iteration:

```
    StateOfPixelFrom(2i+1)ImageRaster (m,n) = StateOfPixelFromPrimary(2i+1)ImageRaster (m,n)
        AND (NOT( StateOfPixelFromCodeRaster (m.n) AND StateOfPixelFromlstlmageRaster (m,n)
        AND StateOfPixelFrom3rdlmageRaster (m,n) AND ... AND
        StateOfPixelFrom(2i-1)ImageRaster (m,n)))
```

the further logical operation being defined by:

```
    StateOfPixelFrom(2i+2)ImageRaster (m,n) = NOT( StateOfPixelFromCodeRaster (m,n) OR
        StateOfPixelFromlstlmageRaster (m,n) OR StateOfPixelFrom3rdlmageRaster (m,n) OR ...
        OR StateOfPixelFrom(2i+1)ImageRaster (m,n) )
```

whereby all rasters of image pixels respectively comprise pixels of bit depth 1, wherein for each raster, a "1"-state of the pixel indicates that a raster-specific surface structure for that raster is to be planned in the topography for a location on the embossing tool surface corresponding to a position (m,n) of the image pixel in the raster, whereas a "0"-state of the pixel indicates that no raster-specific surface structure for that raster is to be planned in the topography for a further location on the embossing tool surface corresponding to a further position of the image pixel in the raster. The method further comprises projecting all rasters of image pixels onto the embossing tool surface to obtain the topography raster of the locations on the embossing tool surface for the raster specific surface structures, and engraving on the engraving tool surface the raster specific surface structures at their respective obtained locations and hence obtain the code containing topography.

In a preferred embodiment the embossing tool with a code-containing topography is a roller provided with a vacuum deposited coating of a thickness between 0,5 µm and 10 µm, exhibiting a hardness of 0,5 GPa to 5,0 GPa.

In a preferred embodiment the engraving on the embossing tool surface occurs by anyone of the techniques in the following list:
direct focusing of at least one laser beam onto the embossing tool surface,
mask projection onto the embossing tool surface,
chemical or plasma etching,
milling or fine grinding.

In a preferred embodiment the code information embossed onto surfaces using the embossing tool with a code-containing topography is readable and decodable with a decoding device.

In a preferred embodiment the code information embossed onto surfaces using the embossing tool with a code-containing topography is readable and decodable only under a determined view angle, obtained by a determined orientation of the code raster-specific surface structures.

In a preferred embodiment the raster-specific surface structures have lateral and height dimension in a range between 10 µm and 1 mm, and preponderantly influence on a visual aspect, on haptics, and on mechanical properties of the materials onto which they are embossed using the embossing tool with a code-containing topography.

In a preferred embodiment the raster-specific surface structures have lateral and height dimensions in a range between 1 µm and 100 µm and preponderantly influence the functionality of the surface onto which they are embossed using the embossing tool with a code-containing topography, modifying properties like wettability, haptics, heat or electric transfer, specular or diffuse reflection (mattifying).

In a preferred embodiment the raster-specific surface structures have lateral and height dimension in a range between 0,1 µm and 10 µm and preponderantly influence a reflexion behavior of the surfaces onto which they are embossed using the embossing tool with a code-containing topography, generating holographic colours, diffraction patterns, view-angle dependent optical effects.

In a further aspect, the invention provides a use of an embossing tool with a code-containing topography manufactured according to the methods described herein above, for embossing a material in any one of scenarios is the following list:
on-line embossing of packaging material;
offline embossing of packaging material;
hot embossing of polymer-based and/or metallic films;
in extrusion coating lines;
in cast-and-cure or in UV or X-ray lacquer-based transfer methods;
in any kind of transfer technology, in which the code containing topography is transferred.

In a further aspect, the invention provides an embossing tool with a code-containing topography, whereby the topography is configured to represent a combination of an image and an alphanumerical or graphical information, the topography comprising a plurality of surface structures distributed according to a topography raster having a determined resolution, on the embossing tool surface, whereby each of the surface structures is one from a determined set of surface structures, each one of surface structures from the determined set of surface being associated to a corresponding raster of image pixels at the determined resolution, at least one of the raster being representative of the alphanumerical or graphical information, the code raster being made from code features of contiguous pixels in "1" state, the contiguous pixels being surrounded by pixels in "0" state, and the remaining image rasters being the result of processing the image by at least one or more of a list comprising transformation, logical operation, translation, and the surface structures corresponding to an associated raster of image pixels having specific shape, size, orientation, scale parameter for the surface structures.

In a further aspect, the invention provides device for manufacturing an embossing tool with a code-containing topography, whereby the topography is configured to represent a combination of an image and an alphanumerical or graphical information, the topography comprising a plurality of surface structures distributed according to a topography raster having a determined resolution, on the embossing tool surface. The device comprises a computer means configured to provide an image file of the image containing a raster of image pixels with a determined bit depth and an initial image resolution, transform the image file (100, 101) into a primary raster of image pixels (300, 301) with the determined resolution, wherein a bit depth of an image pixel in the primary raster of image pixels is 1, provide a code raster of image pixels for the alphanumerical or graphical information, the code raster being made from code features of contiguous pixels in "1" state, the contiguous pixels being surrounded by pixels in "0" state, with a bit depth 1 and with the determined resolution, apply a first logical operation (500) to combine the code raster of image pixels (400, 401, 402) and the primary raster of image pixels (300, 301) in order to obtain a first image raster of image pixels (501) as a result, whereby the first logical operation (500) is defined by:

```
          StateOfPixelFromlstlmageRaster (m,n) = StateOfPixelFromPrimarylmageRaster (m,n)
               AND (NOT( StateOfPixelFromCodeRaster (m.n))),
```

whereby m and n are lines and column indices referencing a pixel in the raster of images pixels, applying a second logical operation (601) to combine the first image raster of image pixels (501) and the code raster of image pixels (400, 401, 402) in order to obtain a second image raster of image pixels (600), whereby the second logical operation (601) is defined by:

```
          StateOfPixelFrom2ndlmageRaster (m,n) = NOT( StateOfPixelFromlstlmageRaster (m,n)
               OR StateOfPixelFromCodeRaster (m,n)),
```

whereby the code raster of image pixels, the first image raster of image pixels and the second image raster of image pixels respectively comprise pixels of bit depth 1, wherein for each raster, a "1"-state of the pixel indicates that a raster-specific surface structure for that raster is to be planned in the topography for a location on the embossing tool surface corresponding to a position (m,n) of the image pixel in the raster, whereas a "0"-state of the pixel indicates that no raster-specific surface structure for that raster is to be planned in the topography for a further location on the embossing tool surface corresponding to a further position of the image pixel in the raster, projecting the code raster of image pixels, the first image raster of image pixels and the second image raster of image pixels onto the embossing tool surface to obtain the topography raster of the locations on the embossing tool surface for the raster specific surface structures, and engraving means configured to engrave on the embossing tool surface the raster specific surface structures at their respective obtained locations and hence obtain the code containing topography.

### Brief descriptions of the drawings

The invention will be better understood through the description of preferred embodiments and in reference to the figures, wherein
Fig. 1 shows an example of a gray scale image with a determined bit depth;
Fig. 2 contains a flowchart of an image transformation process;
Fig. 3 contains an example of image transformation in two different resolutions according to the invention;
Fig. 4 shows an example for a code raster which is representative of a monogram according to the invention;
Fig. 5 illustrates a first logical operation applied to a primary image raster of image pixels and a code raster of image pixels according to a preferred embodiment of the invention;
Fig. 6 illustrates a second logical operation applied to a first image raster of image pixels and the code image raster of image pixels according to a preferred embodiment of the invention;
Fig. 7 illustrates a superposition raster feature;
Fig. 8 illustrates another example of application for the first logical operation;
Fig. 9 illustrates another example of application for the second logical operation;
Fig. 10 illustrates a further superposition raster feature;
Fig. 11(a) illustrates an example of a first translation as applied to the first image raster of image pixels;
Fig. 11(b) illustrates an application of a third logical operation to obtain a third image raster of image pixels;
Fig. 12(a) illustrates an example of a second translation as applied to the first image raster of image pixels;
Fig. 12(b) illustrates an application of a fifth logical operation to obtain a fifth image raster of image pixels;
Fig. 13(a) illustrates an application of a fourth logical operation to obtain a fourth image raster of image pixels;
Fig. 13(b) illustrates an application of a sixth logical operation to obtain a sixth image raster of image pixels;
Fig. 14 illustrates a flowchart explaining how an (2i + 1)-th logical operation is defined according to a preferred embodiment of the invention;
Fig. 15 illustrates a flowchart explaining how an (2i + 2)-th image raster of image pixels is computed according to a preferred embodiment of the invention;
Fig. 16(a) illustrates another example of a superposition feature;
Fig. 16(b) illustrates yet another example of a superposition feature;
Fig. 17 contains a schematic example of a topography raster with different surface structures according to a preferred embodiment of the invention;
Fig. 18 contains another schematic example of a topography raster with different surface structures according to a preferred embodiment of the invention;
Fig. 19(a) contains a schematic representation of an example embossing tool;
Fig. 19(b) contains a further schematic representation of an example embossing tool;
Fig. 20 contains a representation of an embossing set-up comprising 2 embossing rollers;
Fig. 21 contains another schematic example of a topography raster with different surface structures according to a preferred embodiment of the invention;
Fig. 22 contains another schematic example of a topography raster with different surface structures according to a preferred embodiment of the invention;
Fig. 23 contains another schematic example of a topography raster with different surface structures according to a preferred embodiment of the invention;
Fig. 24 contains another schematic example of a topography raster with different surface structures according to a preferred embodiment of the invention;
Fig. 25 contains another schematic example of a topography raster with different surface structures according to a preferred embodiment of the invention;
Fig. 26 schematically depicts a projection of image rasters onto a lateral embossing tool surface of an embossing tool to be engraved;
Fig. 27(a) illustrates a cigarette box in which parts are embossed with a code-containing topography;
Fig. 27(b) illustrates a further example of a cigarette box in which parts are embossed with a code-containing topography;
Fig. 28 illustrates a box for containing blister packages in which parts are embossed with a code-containing topography;
Fig. 29 illustrates a foil package for containing a food product, in which parts are embossed with a code-containing topography;
Fig. 30 illustrates a fluid contained in which parts are embossed with a code-containing topography; Fig. 31 illustrates examples of beverage capsules with sealing foils in which parts are embossed with a code-containing topography;
Fig. 32 illustrates a package with individually packaged chewing gum, in which packaging foils are embossed with a code-containing topography;
Fig. 33 illustrates a reading-out of the code contained in the code-containing topography;
Fig. 34 contains a flowchart illustrating the method of the invention according to a preferred embodiment; and
Fig. 35 contains a flowchart illustrating a further aspect of the invention according to a preferred embodiment.

In addition to the drawings, the following tables are also included:
Table 1 illustrates a first logical operation according to the invention;
Table 2 illustrates a second logical operation according to the invention;
Table 3 illustrates a third logical operation according to the invention;
Table 4 illustrates a fourth logical operation according to the invention;
Table 5 illustrates a fifth logical operation according to the invention; and
Table 6 illustrates a sixth logical operation according to the invention.

Same references are used throughout the figures to designate same or similar features.

### Detailed description of preferred embodiments of the invention

### Obtention of code raster and image rasters

In the following we will describe preferred embodiments for the invention, and more specifically for the method for manufacturing an embossing tool with a code-containing topography. As it will become apparent throughout the description, the topography is configured to represent a combination of an image and an alphanumerical or graphical information. The topography comprises a plurality of surface structures distributed according to a topography raster having a determined resolution, on the embossing tool surface.

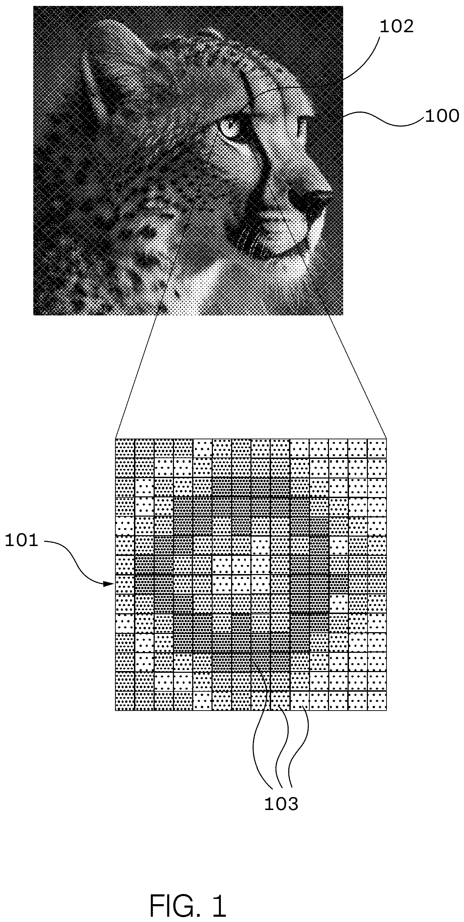

Referring to **Fig. 1**, an image **100** is taken as a start. This may for example be a grey scale image with a determined bit depth, e.g., with a grey scale between 8 and 16 bits. The image **100** has a given image resolution and is composed of image pixels. The image **100** is provided as an image file (not represented in **Fig. 1**) containing a raster of the image pixels.

In addition to the image **100**, **Fig. 1** further shows a zoomed view **101** from a given zone **102**, in the present case of an eye of the animal represented in the image **100,** showing a grid of individual image pixels **103** that each may have a different grey-level, as illustrated by different hatchings for each grey-level.

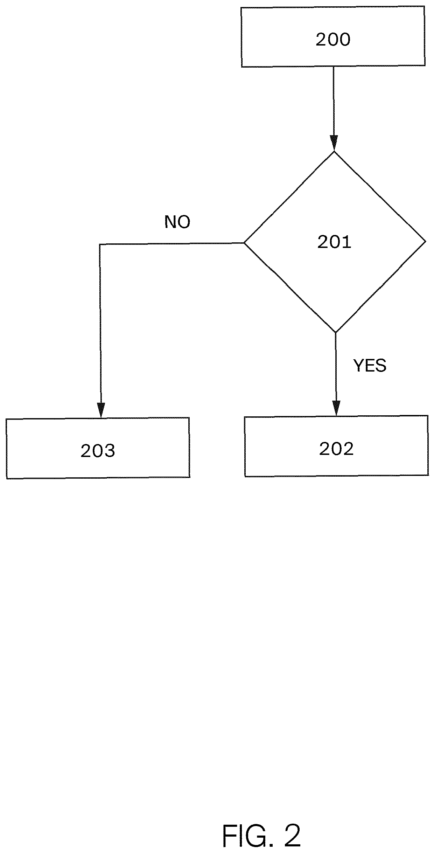

The image file corresponding to the image **100** undergoes a transformation, e.g., a numeric transformation or a binarization. As depicted in **Fig. 2**, in a preferred example of the transformation each image pixel **200** of the image **100** (image not illustrated in **Fig. 2**) is separately considered and submitted to a step **201**, in which, for instance, its grey-level is compared with a defined grey-threshold. For this specific example of the grey-level assessment, if in a case **202** the grey-level of the treated image pixel **200** exceeds the defined grey-threshold, the pixel state "0" is assigned to the image pixel **200**, whereas the pixel state "1" is assigned **203** to the image pixel **200**, if its grey-level is inferior or equal to the defined grey-threshold.

Another preferred example of transforming of the image uses the halftone-screen technique, known from the printing industry and from the image processing software used for the printing industry, in which the elements (i.e., depicted features, brightness, contrast) of the image are decomposed in halftone dots, each halftone dot containing a plurality of image pixels of identical "1"-bit or "0"-bit state.

For example, an image may have an image resolution of 2000 px/cm and may be binarized using the halftone-screen technique, in order to obtain image dots with a spatial frequency of 100/cm, which leads to image dots containing each 20 × 20 either "1" or "0" state image pixels. In other preferred embodiments the image resolution may be 5000 px/cm and even 10000 px/cm.

The halftone-screening spatial frequency may for example vary between 50/cm and 250/cm and it is chosen according to the particularities of the image **100**: an image with narrow details and features (e.g., branches and leaves, human portraits, narrow geometrical features) implies a higher halftone-screening spatial frequency.

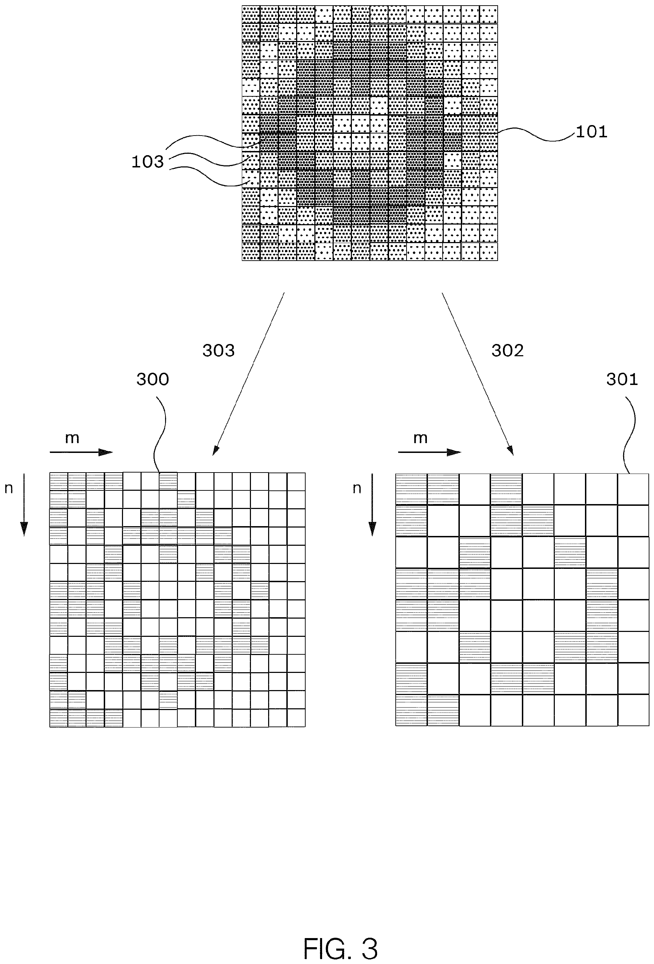

As illustrated in **Fig. 3**, where the transformation is operated on the zoomed view **101**, which corresponds to the zone **102** illustrated in **Fig. 1**, transformations **303** and **302** results in two 1-bit primary image rasters of image pixels respectively **300** and **301**. The primary image rasters of image pixels **300** and **301** each have a corresponding image resolution, which is not necessarily the same as the image resolution of the image **100** (image **100** not shown in **Fig. 3**). In **Fig. 3** the image resolution of the primary image raster of image pixels **300** is greater than the image resolution of the primary image raster of image pixels **301**. By coincidence, the image resolution of the primary image raster of image pixels **300** is the same as the image resolution of the image represented here as the zoomed view **101**. The result of the transformation, i.e., the respective primary image raster of image pixels **300** and **301** in **Fig. 3** comprises a representation of black pixels, i.e., those that have the state of "1" of the transformed image.

Summarizing, **Fig. 3** shows the zoomed view **101** from **Fig. 1**, depicting individual image pixels **103** of different gray-levels and two versions of the primary image raster of image pixels, obtained after the transformation, i.e., the one version represented as primary image raster of image pixels **300**, the other version represented by primary image raster of image pixels **301**; the primary image raster of image pixels contains 1-bit pixels, i.e., pixels that may have the state "0" or "1."

Each pixel in the primary image rasters of image pixels may be referenced by coordinates/indices **m** and **n** as represented in **Fig. 3**.

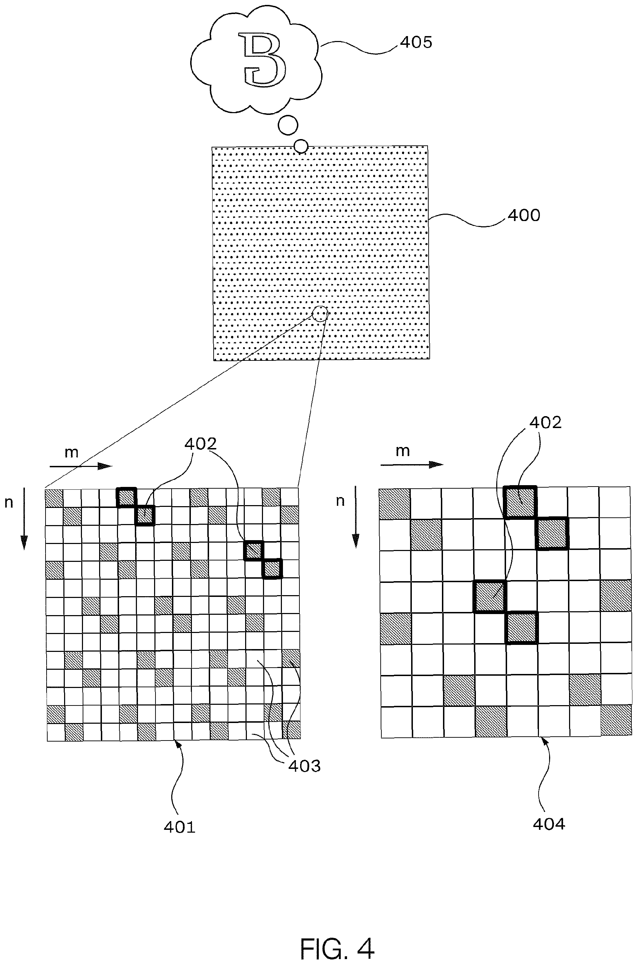

**Fig. 4** shows an example for a code raster of image pixels **400** which is representative of and provided for an alphanumerical or graphical information, in this case a monogram illustrated in a thought cloud **405**, and examples of zoomed extracts **401** and **404** of code features **402** of contiguous pixels in "1" state, the contiguous pixels being surrounded by pixels in "0" state , and more generally individual pixels **403** belonging to the code raster of image pixels **400**. The zoomed extracts **401** and **404** have different image resolutions between each other. Each code feature **402** in this example is an ensemble of two contiguous "1" state image pixels surrounded by "0" state image pixels, and some of the code features **402** are emphasized in **Fig. 4** by a contour of bold lines to be better understood by the reader.

**Fig. 4** illustrates through zoomed extracts **401** and **404** that the image resolution of the code raster of image pixels **400** may be chosen to have different, specific values. However, since the code raster of image pixels **400** is to be combined later with a primary image raster of image pixels, the image resolution of the code raster of image pixels **400** must be identical with that of the primary image raster of image pixels.

In analogy to the coordinates/indices shown in **Fig. 3** each pixel in the code raster of image pixels may be referenced by coordinates **m** and **n** as represented in **Fig. 4**.

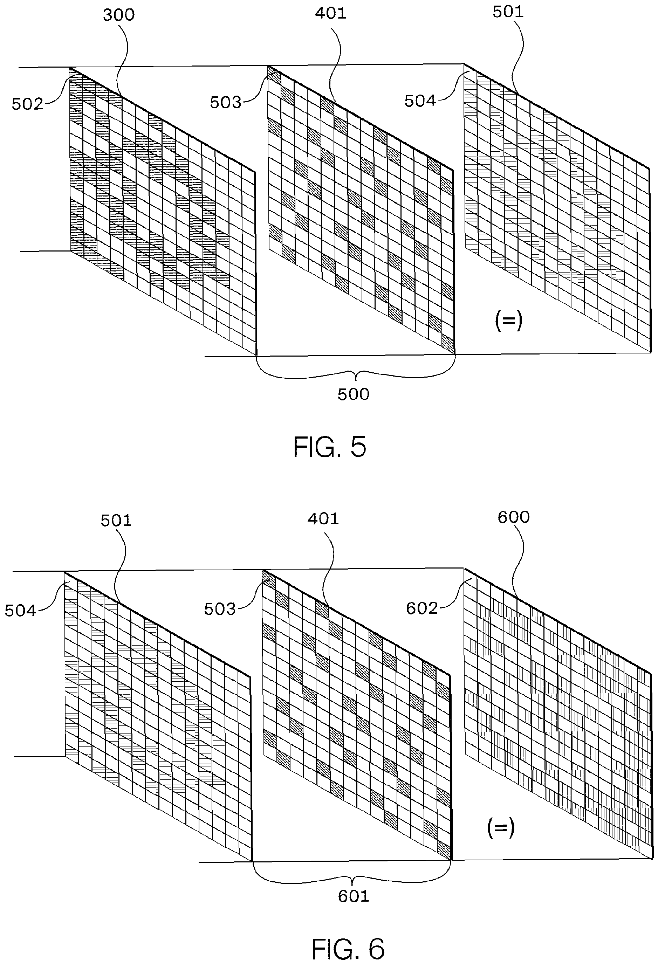

As illustrated in **Fig. 5**, the primary image raster of image pixels **300** and the code raster of image pixels **401** undergo a first logical operation **500** and the result is a first image raster of image pixels **501** as signaled by the sign "=" in the Figure. The first logical operation **500** corresponds to a logical operation known as:

```
    StateOfPixelFromlstlmageRaster (m,n) = StateOfPixelFromPrimarylmageRaster (m,n) AND (NOT(
        StateOfPixelFromCodeRaster (m.n) )),
```

whereby **m** and **n** are lines and column indices referencing a pixel in the raster of images pixels,
StateOfPixelFrom1stImageRaster (m,n) is the state (1 or 0) of the pixel from the first image raster with coordinates **m** and **n** in that raster,
StateOfPixelFromPrimarylmageRaster (m,n) is the state (1 or 0) of the pixel from the primary image raster with coordinates **m** and **n** in that raster, and
StateOfPixelFromCodeRaster (m.n) is the state (1 or =) of the pixel from the code raster with coordinates **m** and **n** in that raster.

The first logical operation **500** is described by **Table 1**, in all possible logical combinations, in which the states of the image pixels belonging to the first image raster of images pixels **501** are calculated.

**Fig. 5** further shows the obtention of the first image raster of image pixels **501**, according to the rules contained in **Table 1** as required for the first logical operation **500**. For example, pixel **502** of the primary image raster of image pixels **300** has the state "1" and a corresponding pixel **503** of the code image raster of image pixels **401** also has the state "1", which results in the corresponding pixel **504** of the first image raster of image pixels **501** having the state "0" in line with the first line of **Table 1**.

Referring now to **Fig. 6**, based on the raster-like construction of the image rasters, and using the first image raster of image pixels **501** and the code raster of image pixels **401**, a second image raster of images pixels **600** is computed (as signaled by the sign "=" in the **Fig. 6**, according to a second logical operation **601**, according to the rules contained in **Table 2**. The second logical operation **601** is defined as:

```
    StateOfPixelFrom2ndImageRaster (m,n) = NOT( StateOfPixelFrom1stImageRaster (m,n) OR
        StateOfPixelFromCodeRaster (m,n)),
```

whereby m and n are lines and column indices referencing a pixel in the raster of images pixels,
StateOfPixelFrom2ndImageRaster (m,n) is the state (1 or 0) of the pixel from the second image raster with coordinates **m** and **n** in that raster,
StateOfPixelFromlstlmageRaster (m,n) is the state (1 or 0) of the pixel from the first image raster with coordinates **m** and **n** in that raster, and
StateOfPixelFromCodeRaster (m.n) is the state (1 or 0) of the pixel from the code raster with coordinates **m** and **n** in that raster.

For example, pixel **504** of the first image raster of image pixels **501** has the state "0" and a corresponding pixel **503** of the code image raster of image pixels **401** has the state "1", which results in a corresponding pixel **602** of the second image raster of image pixels **600** having the state "0" in line with the first line of **Table 2**.

As already mentioned, **Fig. 6** shows the first image raster of image pixels **501**, and the code image raster of image pixels **401** and further illustrates the calculation of the second image raster of image pixels **600**, according to the rules contained in **Table 2** for executing the second logical operation **601**.

Given the rules of the first logical operation **500** and of the second logical operation **601**, the code image raster of image pixels **401**, the first image raster of image pixels **501**, and the second image raster of image pixels **600** are completely adjacent, i.e., there is no superposition of pixels from one image raster of image pixels to another. Their superposition gives the entire pixel ensemble of the transformed image combined with the code.

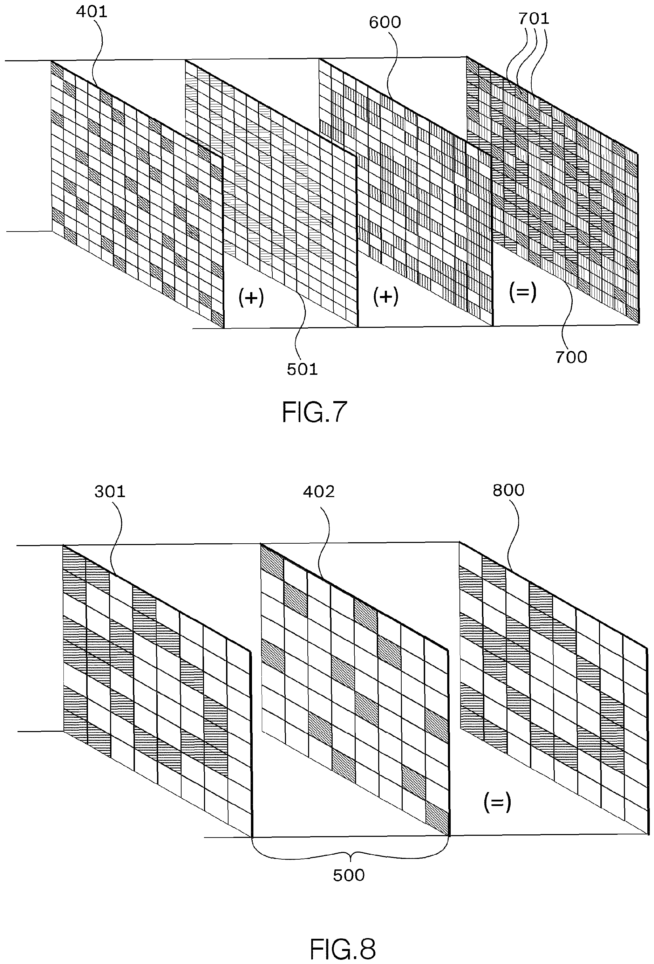

Referring now to **Fig. 7**, this shows the code image raster of image pixels **401**, the first image raster of image pixels **501**, the second image raster of image pixels **600**, and a superposition raster feature of image pixels **700** which results from the superposition of the three image rasters as indicated by the signs "+" and "=", whereby the superposition raster feature of image pixels **700** may be seen as a checksum to verify the coherence of the three image rasters, in which each image pixel **701** belongs to only one of the code image raster of image pixels **401**, the first image raster of image pixels **501**, or the second image raster of image pixels **600**.

**Figs. 8** to **10** illustrate the application of the first logical operation **500** and of the second logical operation **601** to the code image raster of image pixels **402** and the first primary image raster of image pixels **301** having a different, e.g., a lower image resolution than the case presented in the **Figs. 5 to 7**. As the latter have already been described in detail, we will only briefly go into this example applied to the lower image resolution.

In **Fig. 8** the primary raster of image pixels **301** and the code raster of image pixels **402** undergo the first logical operation **500** and the result is a first image raster of image pixels **800** as signaled by the sign "=" in the Figure.

The first logical operation **500** is described by **Table 1**, in which the states of the image pixels belonging to the first image raster of image pixels **800** are calculated.

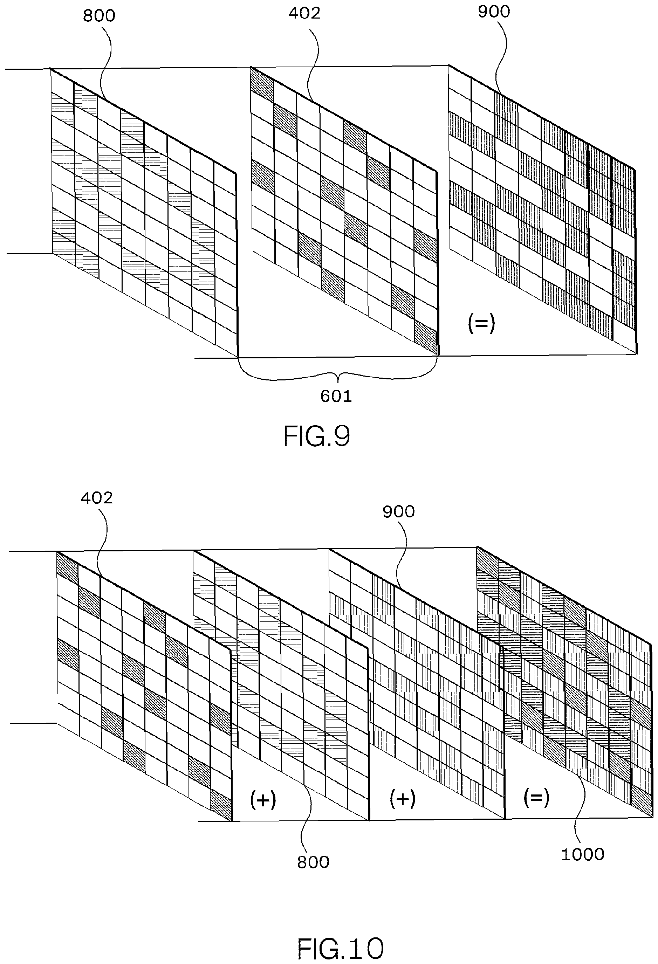

Referring now to **Fig. 9**, using the first image raster of image pixels **800** and the code raster of image pixels **402**, a second image raster of image pixels **900** is computed (as signaled by the sign "=" in the Figure), according to the second logical operation **601**, and according to the rules contained in **Table 2**.

Equally in this case, the code image raster of image pixels **402,** the first image raster of image pixels **800**, and the second image raster of image pixels **900** are completely adjacent. Referring now to **Fig. 10**, this shows the code image raster of image pixels **402**, the first image raster of image pixels **800,** the second image raster of image pixels **900**, and a superposition raster feature of images pixels **1000** which results from the superposition of the three image rasters as indicated by the signs "+" and "=", whereby the superposition raster feature of image pixels **1000** may be seen as a checksum to verify the coherence of the three image rasters, in which each image pixel belongs to only one of the code image raster of image pixels, the first image raster of image pixels, or the second image raster of image pixels, similar as explained for **Fig. 7**.

Subsequent to the steps described in this chapter, the invention further comprises steps relating to projecting and engraving as described in the chapter "engraving instructions" herein below.

For the engraving step, to each of the above rasters which may also be designated as "engraving rasters", i.e., the code raster of image pixels, the first image raster of image pixels, and other rasters of image pixels, an individual corresponding set of engraving instructions will be assigned for surface structures to engrave, for example an individual orientation of a surface structure.

### Further aspects and example embodiments of the invention in obtaining image rasters

Starting from the first image raster of image pixels **501**, determined according to the rules of **Table 1**, as described herein above, further aspects and example embodiments of the invention may be presented.

Using the first image raster of image pixels **501**, further image rasters may be obtained, according to example embodiments of the present invention, through further operations, which more specifically and for example may comprise a translation.

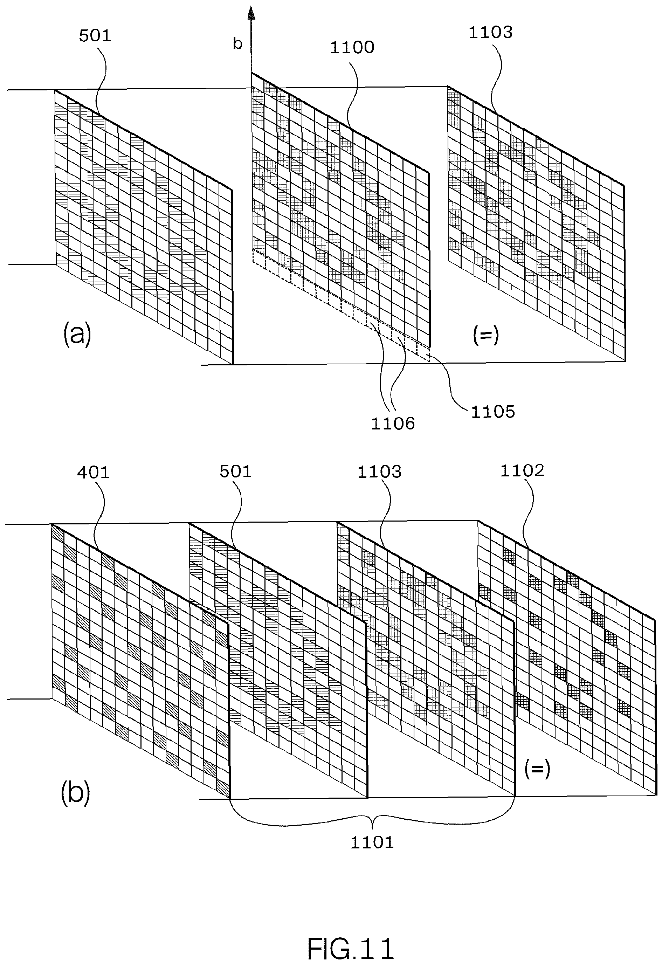

In a further aspect, a first translation is applied to the first image raster of image pixels **501**. Referring to **Fig. 11(a)** the first translation is a translation with a first couple **(a, b)** of image pixels in directions of coordinates **(m, n)** respectively, hence defining a translation vector, and a primary third image raster of image pixels **1103** is obtained. For example, the first image raster of image pixels **501** may be translated with one image pixel up (**a** = 0, **b** = 1), i.e., as depicted in **Fig. 11(a)****,** and as suggested by the arrow adjacent to the illustration of a first translation raster **1100**. The first translation is generally defined by a first translation equation:

```
    StateOfPixelOfPrimary3rdlmageRaster (m,n) = StateOfPixelFrom1stImageRaster (m-a,n-b)
```

**a** and **b** corresponding to the translation vector in the raster,
the equation being applied when **m-a** or **n-b** respectively correspond to indices of a pixel that is inside a range of the raster under consideration for the translation,
StateOfPixelOfPrimary3rdlmageRaster (m,n) is the state (1 or 0) of the pixel from the primary third image raster with coordinates **m** and **n** in that raster, and
StateOfPixelFrom1stImageRaster (m-a,n-b) is the state (1 or 0) of the pixel from the first images raster of image pixels with coordinates **m-a** and **n-b** in that raster.

As also shown in the example of **Fig. 11(a)**, when translating with one image pixel up (**a** = 0, **b** = 1), the first translation adds a line **1105** of added image pixels **1106** having a state 0. This is expressed by StateOfPixelOfPrimary3rdlmageRaster (m,n) = 0 if **m-a** or **n-b** correspond respectively to indices of a pixel that are out of a range of the raster under consideration for the translation.

At this point an image pixel may still have the state "1" in both of the first image raster of image pixels **501** and the primary third image raster of image pixels **1103** which is not compatible with the obtention of the code-containing topography. For this case, a rule corresponding to a third logical operation **1101** to obtain a third image raster of image pixels **1102** is defined in **Table 3.**

**Fig. 11(b)** shows the code raster of image pixels **401**, the first image raster of image pixels **501**, the primary third image raster of image pixels **1103,** and the third image raster of image pixels **1102** obtained through the third logical operation **1101** from the image rasters **401**, **501** and **1103**, and hence illustrates the calculation of the third image raster of image pixels **1102**, according to the rules contained in **Table 3** as signalized by the sign "=".

The third logical operation **1101** is defined by:

```
    StateOfPixelFrom3rdlmageRaster (m,n) = StateOfPixelFromPrimary3rdImageraster (m,n) AND
        (NOT( StateOfPixelFromCodeRaster (m,n) AND StateOfPixelFrom1stImageRaster (m,n)))
```

StateOfPixelFrom3rdImageRaster (m,n) is the state (1 or 0) of the pixel from the third image raster **1102** with coordinates **m** and **n** in that raster.

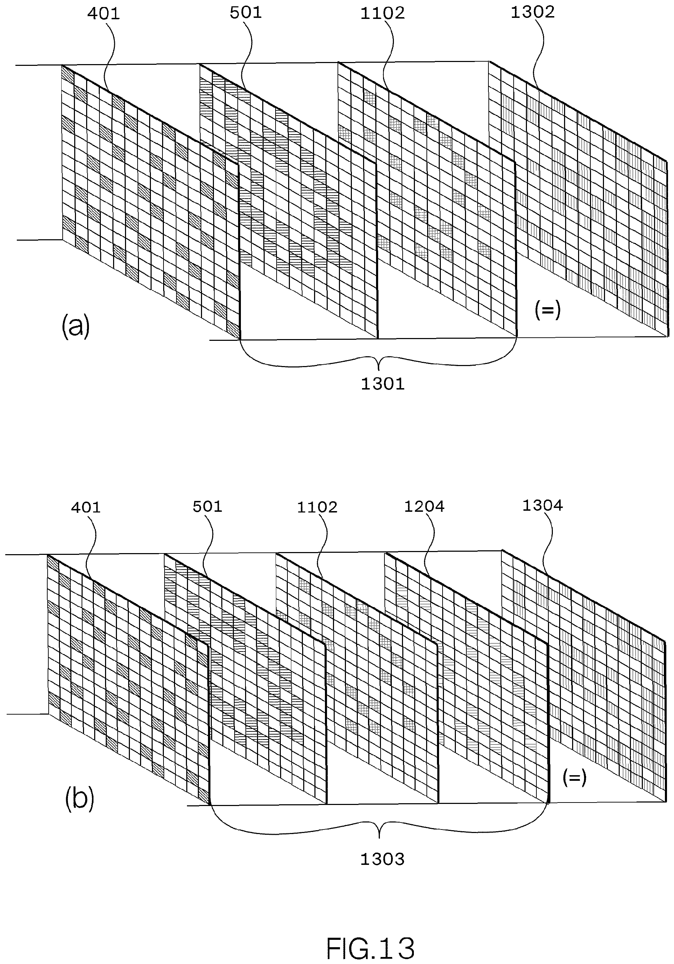

Referring now to **Fig. 13(a)** this illustrates a fourth logical operation **1301** applied to the code raster of image pixels **401**, the first image raster of image pixels **501** and the third image raster of image pixels **1102** to obtain a fourth image raster of image pixels **1302**, according to the rule indicated in **Table 4**. The underlying fourth logical operation **1301** is defined by:

```
    StateOfPixelFrom4thImageRaster (m,n) = NOT( StateOfPixelFromCodeRaster (m,n) OR
        StateOfPixelFrom1stImageRaster (m,n) OR StateOfPixelFrom3rdImageraster (m,n))
```

wherein StateOfPixelFrom4thlmageRaster (m,n) is the state (1 or 0) of the pixel from the fourth image raster of image pixels **1302** with coordinates **m** and **n** in that raster.

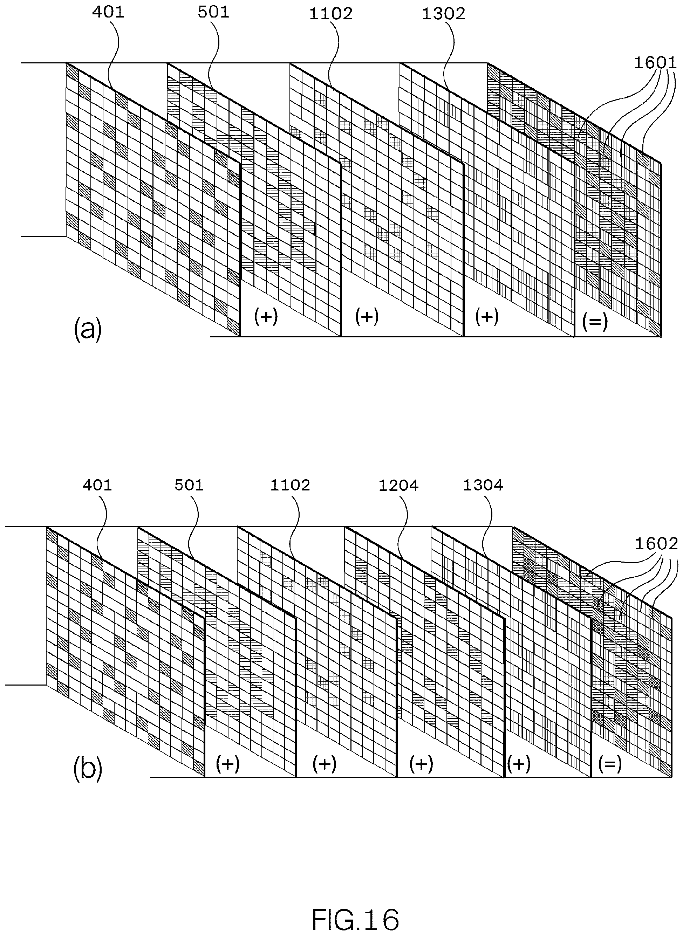

Referring now to **Fig. 16(a)**, this shows the code image raster of image pixels **401**, the first image raster of image pixels **501**, the third image raster of image pixels **1102**, the fourth image raster of image pixels **1302** and a superposition raster feature of image pixels **1601** which results from the superposition of the four image rasters as indicated by the signs "+" and "=", whereby the superposition raster feature of image pixels **1601** may be seen as a checksum to verify the coherence of the four image rasters, in which each image pixel **1601** belongs to only one of the code image raster of image pixels **401**, the first image raster of image pixels **501**, the third image raster of image pixels **1102**, or the fourth image raster of image pixels **1302**.

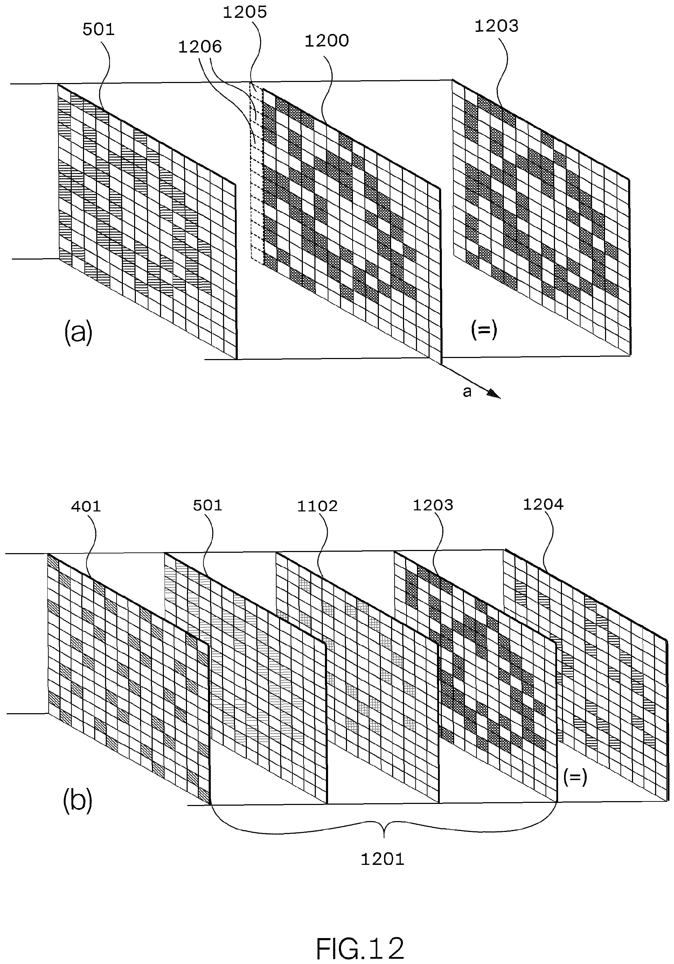

In a preferred embodiment illustrated in **Figs. 12(a)** and **12(b)**, a second translation is applied to the first image raster of image pixels **501**. Referring to **Fig. 12(a)** the second translation is a translation with a second couple **(a, b)** of image pixels in directions of coordinates **(m, n)** respectively, hence defining a second translation vector, and a primary fifth image raster of image pixels **1203** is obtained. For example, the first image raster of image pixels **501** may be translated with one image pixel sideways (**a** = 1, **b** = 0), i.e., as depicted in **Fig. 12(a)****,** and as suggested by the arrow adjacent to the illustration of a second translation raster **1200**. The second translation is generally defined by a second translation equation:

```
    StateOfPixelOfPrimary5thImageRaster (m,n) = StateOfPixelFrom1stImageRaster (m-a,n-b)
```

**a** and **b** corresponding to the second translation vector in the raster,
the equation being applied when **m-a** or **n-b** respectively correspond to indices of a pixel that is inside a range of the raster under consideration for the translation,
StateOfPixelOfPrimary5thlmageRaster (m,n) is the state (1 or 0) of the pixel from the primary fifth image raster with coordinates **m** and **n** in that raster.

As also shown in the example of **Fig. 12(a)**, when translating with one image pixel sideways (**a** = 1, **b** = 0), the second translation adds a column **1205** of added image pixels **1206** having a state 0. This is expressed by StateOf PixelOf Prima ry5th Image Raster (m,n) = 0 if **m-a** or **n-b** correspond respectively to indices of a pixel that are out of a range of the raster under consideration for the translation

Referring now to **Fig. 12(b)**, at this point an image pixel may still have the state "1" in both of the third image raster of image pixels **1102** and the primary fifth image raster of image pixels **1203** which is not compatible with the obtention of the code-containing topography. For this case, a rule corresponding to a fifth logical operation **1201** to obtain a fifth image raster of image pixels **1204** is defined as may be seen from **Table 5** and from the combination of image rasters **in** **Fig. 12(b)****.**

Referring now to **Fig. 13(b)** this illustrates a sixth logical operation **1303** applied to the code raster of image pixels **401**, the first image raster of image pixels **501,** the third image raster of image pixels **1102** and the fifth image raster of image pixels **1204**, according to the rules from **Table 6**, to obtain a sixth image raster of image pixels **1304**, according to the rules also derivable from **Fig. 13(b)****.**

Referring now to **Fig. 16(b)**, this shows the code image raster of image pixels **401**, the first image raster of image pixels **501**, the third image raster of image pixels **1102**, the fifth image raster of image pixels **1204,** the sixth image raster of image pixels **1304**, and a superposition raster feature of image pixels **1602** which results from the superposition of the five image rasters as indicated by the signs "+" and "=", whereby the superposition raster feature of image pixels **1602** may be seen as a checksum to verify the coherence of the five image rasters, in which each image pixel **1602** belongs to only one of the code image raster of image pixels **401**, the first image raster of image pixels **501**, the third image raster of image pixels **1102**, the fifth image raster of image pixels **1204**, or the sixth image raster of image pixels **1304**.

As a general rule, applying at least a further translation and at least a further logical operation to obtain an (2i+1)-th image raster of image pixels and an (2i+2)-th image raster of image pixels by applying a general rule as follow, whereby i corresponds to the number of an i-th iteration.

After an i-th translation (according to a vector **(aᵢ, bᵢ)**) of the first image raster of image pixels **501**, an (2i + 1)-th primary image raster of image pixels is obtained as a result. At this point an image pixel may still have the state "1" in both of the (2i - 1)-th image raster of image pixels and the primary (2i + 1)-th image raster of image pixels which is not compatible with the obtention of the code-containing topography.

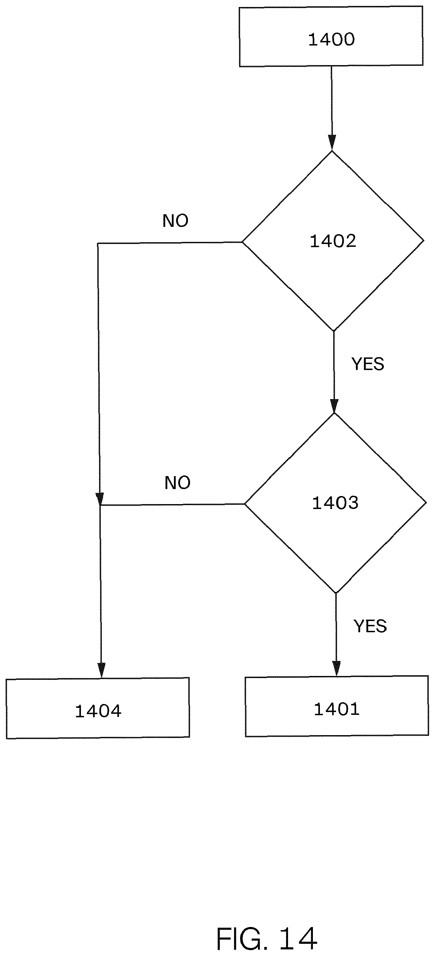

For this case, a rule corresponding to a (2i + 1)-th logical operation, to obtain an (2i + 1)-th image raster of image pixels, is defined according to the following rule illustrates in **Fig. 14**:

An image pixel (m, n) of the (2i + 1)-th image raster of image pixels is selected as in box **1400**; and then its state is determined to be

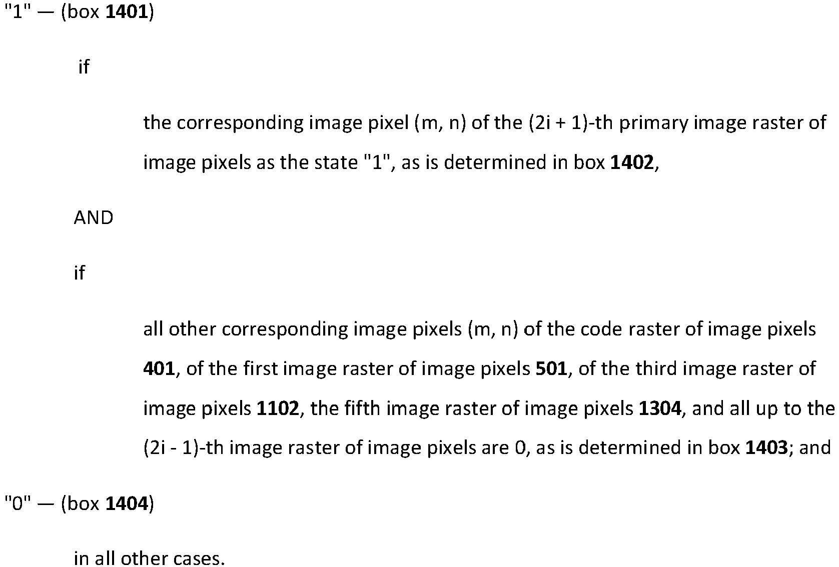

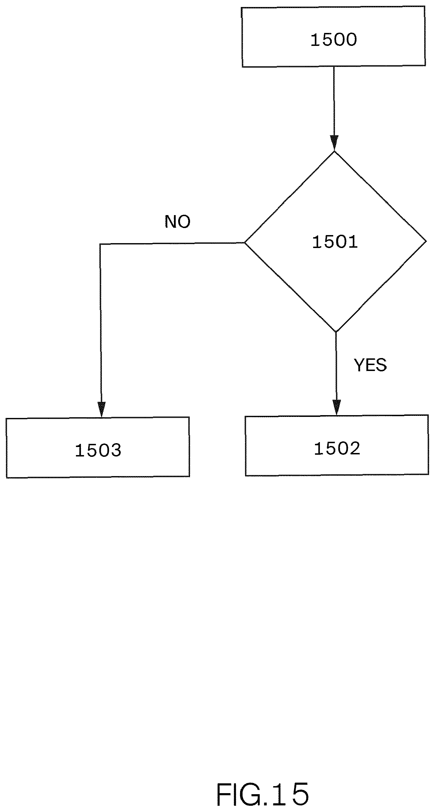

Finally, using the code raster of image pixels **401**, the first image raster of image pixels **501**, the third image raster of image pixels **1102**, the fifth image raster of image pixels **1304**, and all up to the (2i + 1)-th image raster of image pixels, an (2i + 2)-th image raster of image pixels is computed according to the following rule, referring also to **Fig. 15**:
An image pixel (m, n) of the (2i + 2)-th image raster of image pixels is selected as in box **1502**; and then its state is determined to be

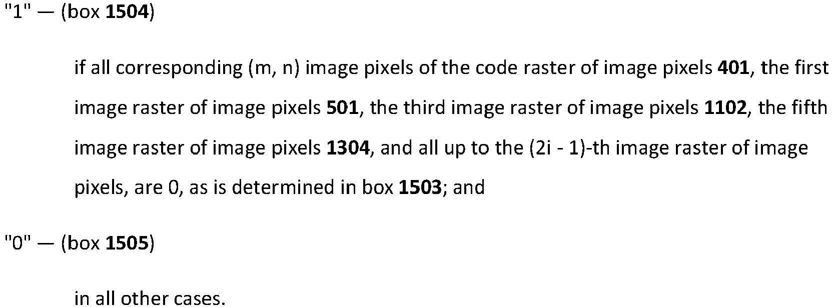

The superposition feature, or checksum as indicated in some of the above figures is only for purposes of better understanding the nature of the code raster of image pixels, the first image raster of image pixels, and other rasters of image pixels in general, but it has no further technical function in the manufacturing of an embossing tool by engraving. Rather it is the code raster of image pixels, the first image raster of image pixels, and other rasters of image pixels in general that are used in the process of manufacturing of the embossing tool.

Subsequent to the steps described in this chapter, the invention further comprises steps relating to projecting and engraving as described in the chapter "engraving instructions" herein below.

For the engraving step, to each of the above rasters which may also be designated as "engraving rasters", i.e., the code raster of image pixels, the first image raster of image pixels, and other rasters of image pixels, an individual corresponding set of engraving instructions will be assigned for surface structures to engrave, for example an individual orientation of a surface structure.

### Engraving instructions

Following the obtention of the code raster of image pixels, and of the other rasters of image pixels depending on the case through logical operation(s) and translation(s), these respectively comprise pixels of bit depth 1, wherein for each raster, a "1" state of the pixel indicates that a raster-specific surface structure for that raster is to be planned in the topography for a location on the embossing tool surface corresponding to a position (m, n) of the image pixel in the raster, whereas a "0" state of the pixel indicates that no raster-specific surface structure for that raster is to be planned in the topography for a further location on the embossing tool surface corresponding to a further position of the image pixel in the raster.

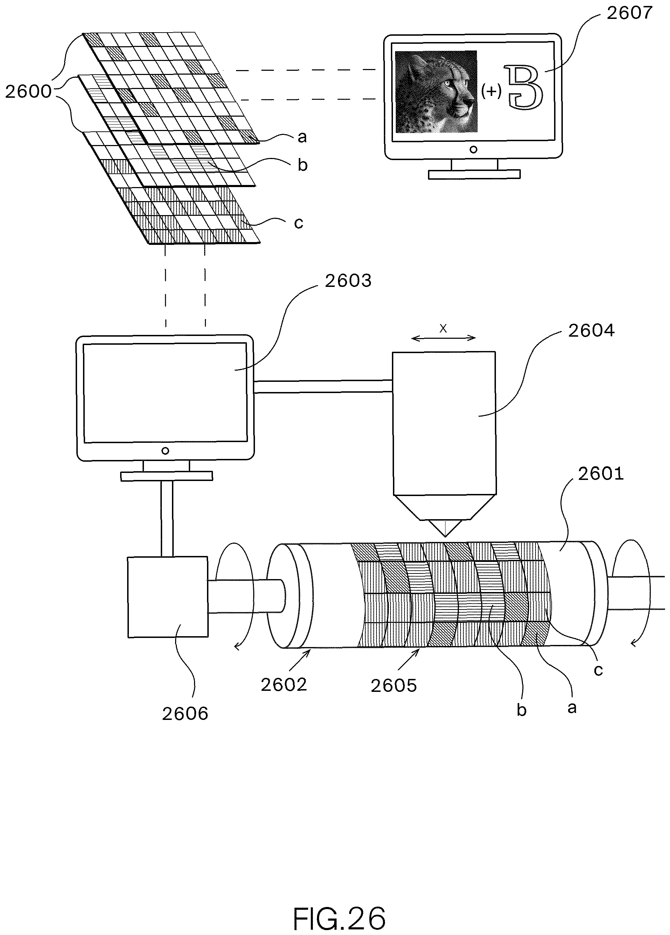

The code raster of image pixels, the first image raster of image pixels and other rasters of image pixels depending on the case are projected onto the embossing tool surface to obtain the topography raster of the locations on the embossing tool surface for the raster specific surface structures. This is illustrated in **Fig. 26** in which the relation between the engraving rasters **2600** and a lateral embossing tool surface **2601** of the embossing tool **2602** to be engraved is depicted. The engraving rasters **2600** may for example comprise the code raster, the first image raster of image pixels and the second raster of image pixels calculated by computer means **2607**. Various pixels having the state "1" such as for example **a**, **b**, and c are projected onto the embossing tool surface by means of a computer **2603** to obtain the topography raster of the locations on the embossing tool surface for the raster specific surface structures (topography raster of locations not illustrated). The topography raster of the locations is then used by computer **2603** to control the engraving, by example by means of a laser **2604** as appropriate, by positioning the laser **2604** to focus its laser beam on the embossing tool surface **2601** such that the raster specific surface structures are engraved at their respective obtained locations and hence obtain the code-containing topography **2605**. The latter comprises for example surface structures corresponding to raster locations **a**, **b** and **c**. The embossing tool **2602** may in the example of **Fig. 26** also be rotated as controlled by computer **2603** and a drive motor **2606** to perform a relative positioning between locations of the embossing tool surface **2601** and the engraving laser **2604.**

Subsequently the engraving is done on the embossing tool surface **2601**, of the raster specific surface structures at their respective obtained locations according to the projection, and hence the code containing topography **2605** is obtained.

The raster specific surface structures may be associated with engraving parameters to be implemented at the time of engraving, such as, e.g., an orientation, a spacing to a neighboring surface structure, a scaling, a lateral dimension, and a height of the surface structure.

### Additional preferred embodiments

Previous to engraving, the embossing tool may undergo a mechanical preparation (e.g., by turning, grinding, fine grinding), which should preferably contain a polishing process. Through mechanical polishing (e.g., with diamond-containing polishing bands and/or with diamond-containing aqueous suspensions and pastes of various grades) preferably yielding surface roughness values Ra below 50 nm, most preferably below 20 nm, the embossing tool surface is prepared to accommodate structures (e.g., grooves) of heights below 500 nm, e.g., of 200 nm.

In a preferred embodiment, for illustration purposes, for an image resolution of 2000 px/cm, an image pixel has in this case a lateral dimension of 5 µm, whereas for an image resolution of 250 px/cm the image pixel has a lateral dimension of 40 µm. In the case of the 1:1 projection of the image rasters onto the embossing tool surface, a raster cell will have a lateral dimension of 5 µm in the former case and of 40 µm in the latter.

In the former case of a raster cell of 5 µm × 5 µm, further according to this embodiment and according to a corresponding set of engraving instructions, the raster cell on the embossing tool surface may be engraved with grid of grooves (e.g., five 0,5 µm wide lines with 1 µm pitch). Further according to another example of the set of engraving instructions, the entire surface of the raster cell is engraved at a homogeneous depth of 3 µm.

In the latter case of a raster cell of 40 µm × 40 µm, further according to this embodiment and according to corresponding sets of engraving instructions, the raster cell on the embossing tool surface may be engraved with a grid of grooves (e.g., five 4 µm wide lines with 8 µm pitch), or of halfspheres (e.g., of 10 µm radius with 20 µm pitch), or the entire surface of the raster cell is engraved at a homogeneous depth of 25 µm.

In a further preferred embodiment, for an image resolution of 200 px/cm, the image pixel has a lateral dimension of 50 µm, which in the case of the 1:1 projection of the image rasters onto the embossing tool surface yields a raster cell will a lateral dimension of 50 µm.

According to this embodiment and to a corresponding set of engraving instructions, the plurality of raster cells obtained after the projection of the image pixels of the code raster of image pixels and of all image rasters of image pixels onto the surface of the embossing tool to be manufactured are engraved at homogenous depths (for example between 0 µm and 50 µm), so that a corresponding set of engraving instructions provides one determined engraving depth for each projection of the above mentioned code raster and image rasters.

In a further example for this embodiment with raster cells of 50 µm × 50 µm, a set of engraving instructions provides for at least one of the projections of the code raster of image pixels and of all image rasters of image pixels to be engraved with a depth gradient between 40 µm and 10 µm, i.e., as a truncated cuboid with a 50 µm × 50 µm base.

### Surface Structures

As already indicated, the embossing tool to be manufactured with a code-containing topography may have a topography comprising a plurality of surface structures distributed according to a topography raster having a determined resolution. The topography raster is the result of the step of projecting the image pixels of the various image rasters previously obtained, whereby a raster cell is the result of projecting an image pixel onto the surface of the embossing tool to be manufactured, and whereby each of the various image rasters is indicative for a specific type of surface structure to be planned at locations on the embossing tool surface.

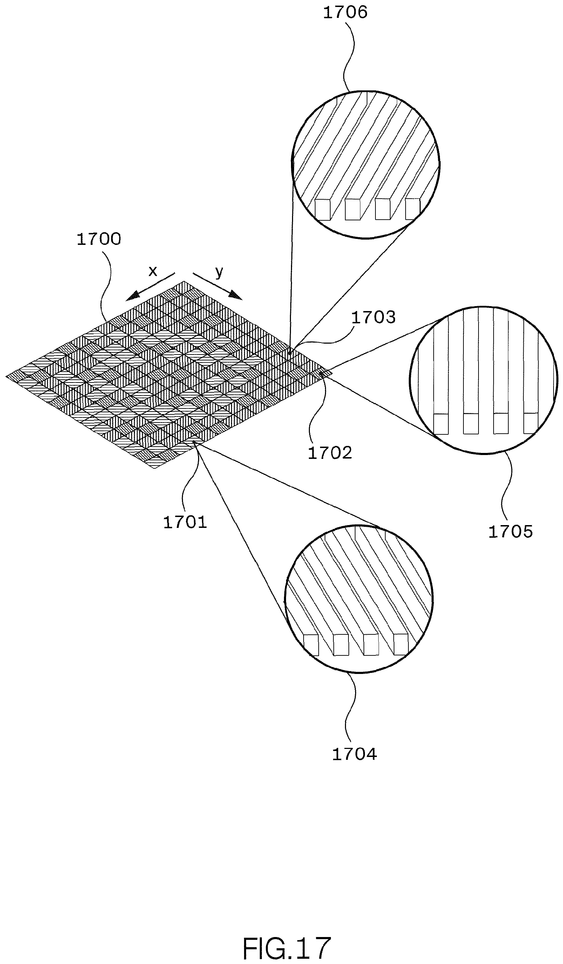

Referring now to **Fig. 17**, this schematically represents a topography raster **1700** with raster cells, e.g., **1701, 1702, 1703** that indicate a type of surface structure to be engraved at a position (x, y) on the embossing tool surface, whereby each type of surface structure corresponds to an image raster of image pixels (e.g., code raster, first image raster, ...) not illustrated in **Fig. 17**. Surface structures **1704**, **1705**, and **1706** corresponding to raster cells **1701, 1702, 1703** respectively, may be different from each other, hence clearly indicating that they originate from different image rasters of image pixels. In the present example the surface structures **1704**, **1705**, and **1706** are diffractive grid structures having directions differing depending on the image raster from which their planning originates.

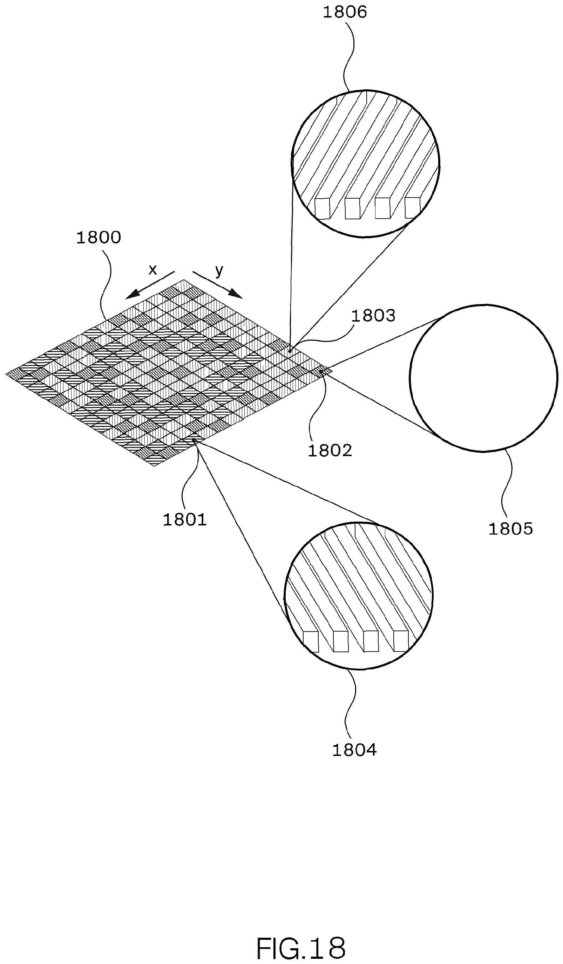

Referring now to **Fig. 18**, this schematically represents a further topography raster **1800** with raster cells, e.g., **1801**, **1802**, **1803** that indicate a type of surface structure to be engraved at a position (x, y) on the embossing tool surface, whereby each type of surface structure corresponds to an image raster of image pixels not illustrated in **Fig. 18****.** Surface structures **1804**, **1805**, and **1806** corresponding to raster cells **1801**, **1802**, **1803** respectively, may be different from each other, hence clearly indicating that they originate from different image rasters of image pixels. In the present example the surface structures **1804** and **1806** are diffractive grid structures having directions differing depending on the image raster from which their planning originates, while surface structure **1805** corresponds to a non-engraved surface represented as a white surface, whereby in this context non-engraved surface is meant to correspond to the original tool surface which may be polished.

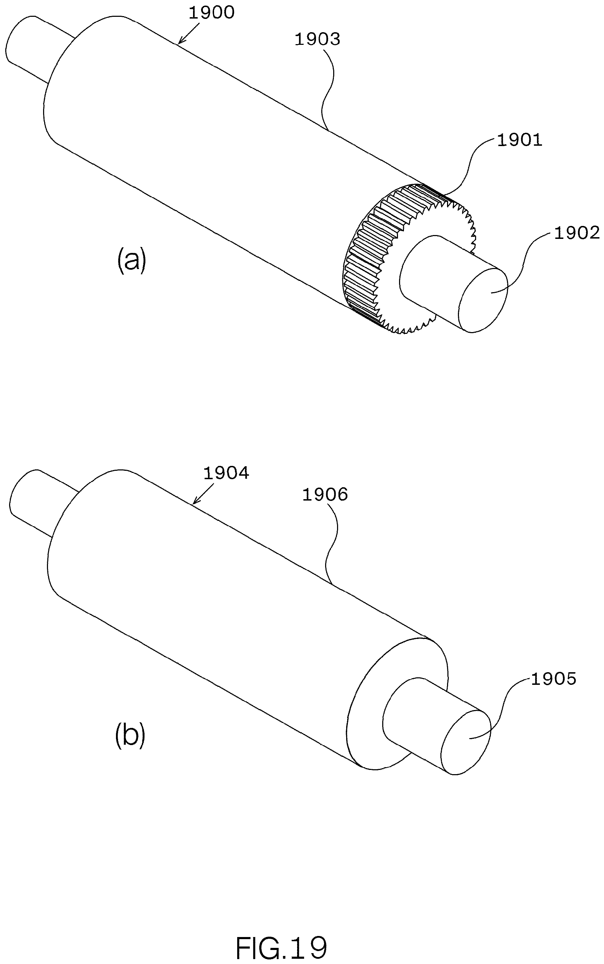

**Fig. 19(a)** schematically represents an embossing tool in form of a first roller **1900** configured to rotate around a first axis **1902**, and that comprises at one of its extremities a toothed wheel **1901** to be used for driving the first roller **1900**. A first embossing tool surface **1903** is configured to be engraved with surface structures (not illustrated).

**Fig. 19(b)** schematically represents a further embossing tool in form of a second roller **1904** which is configured to be driven through its second axis **1905**. A second embossing tool surface **1906** is configured to be engraved with surface structures (not illustrated).

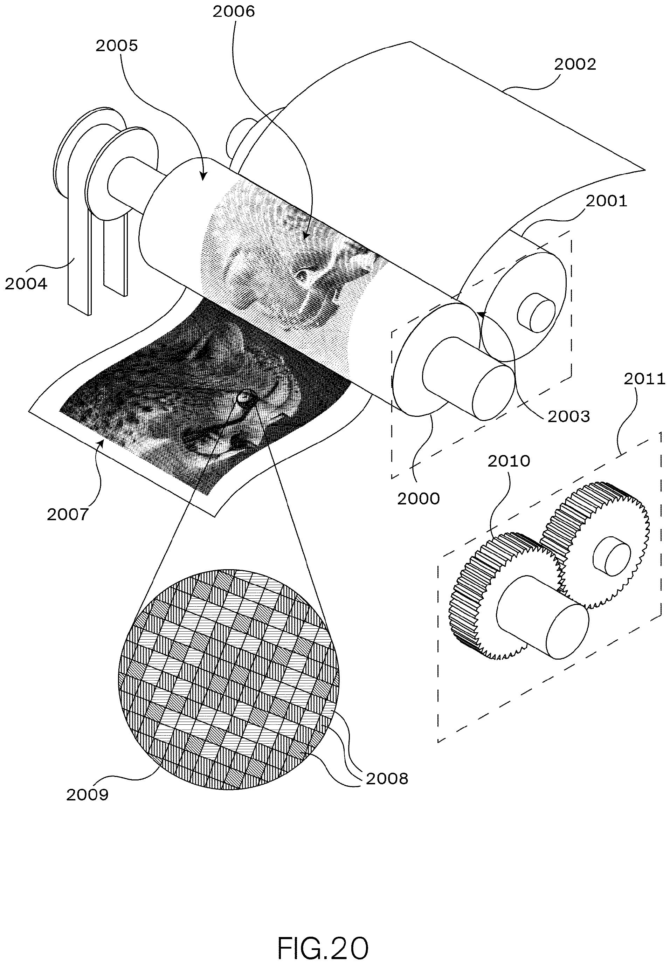

**Fig. 20** schematically represents an embossing set-up comprising 2 embossing rollers **2000** and **2001** which collaborate to emboss a sheet material **2002** inserted into nip **2003**. The embossing roller **2000** may be belt-driven over belt **2004.** Alternatively, the drive system may include tooth wheels **2010** at extremities **2011** of the embossing rollers **2000** and **2001**, enabling the roller **2000** to rotate the roller **2001**. The embossing roller **2000** has been manufactured according to the method for manufacturing an embossing tool with a code-containing topography as described in different embodiments herein above, and comprised engraved on an embossing tool surface **2005** the raster specific surface structures according to the code containing topography **2006.** As a result of embossing the sheet material **2002**, an embossed code-containing topography **2007** has been embossed in which embossed surface structures **2008** are found as illustrated in the magnified view **2009**.

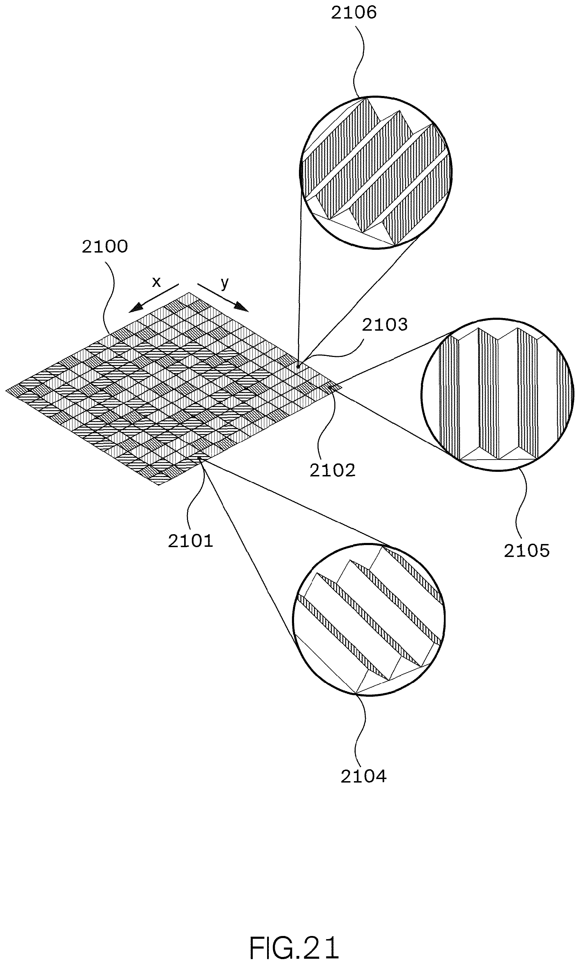

Referring now to **Fig. 21**, this schematically represents a topography raster **2100** with raster cells, e.g., **2101**, **2102**, **2103** that indicate a type of surface structure to be engraved at a position (x, y) on the embossing tool surface, whereby each type of surface structure corresponds to an image raster of image pixels (e.g., code raster, first image raster, ...) not illustrated in **Fig. 21**. Surface structures **2104**, **2105**, and **2106** corresponding to raster cells **2101**, **2102**, **2103** respectively, may be different from each other, hence clearly indicating that they originate from different image rasters of image pixels. In the present example the surface structures **2104**, **2105**, and **2106** are grid structures with triangular cross sections, and having directions differing depending on the image raster from which their planning originates.

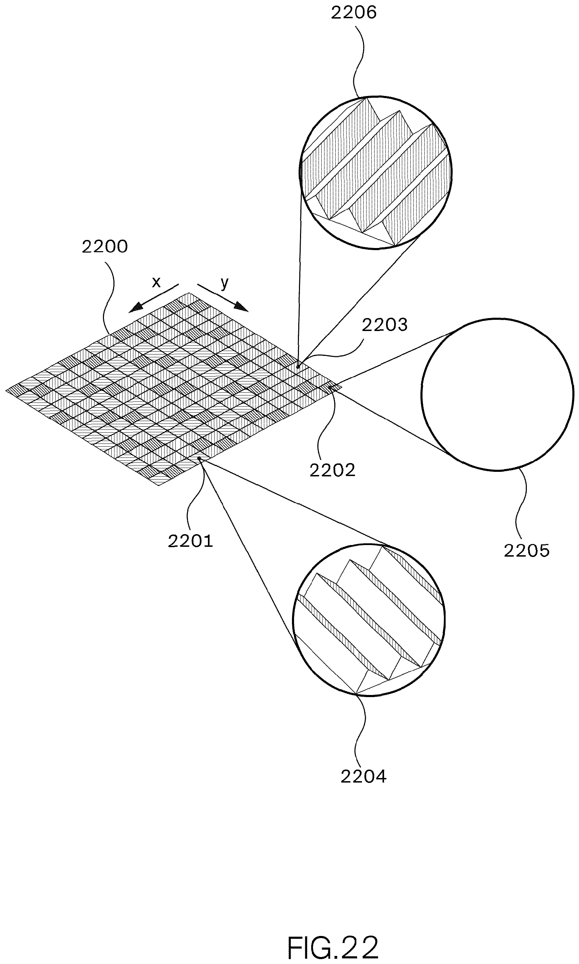

Referring now to **Fig. 22**, this schematically represents a further topography raster **2200** with raster cells, e.g., **2201**, **2202**, **2203** that indicate a type of surface structure to be engraved at a position (x, y) on the embossing tool surface, whereby each type of surface structure corresponds to an image raster of image pixels not illustrated in **Fig. 22****.** Surface structures **2204**, **2205**, and **2206** corresponding to raster cells **2201**, **2202**, **2203** respectively, may be different from each other, hence clearly indicating that they originate from different image rasters of image pixels. In the present example the surface structures **2204** and **2206** are grid structures with triangular cross sections, and having directions differing depending on the image raster from which their planning originates, while surface structure **2205** corresponds to a non-engraved surface represented as a white surface, whereby in this context the non-engraved surface is meant to correspond to the original tool surface which may be polished.

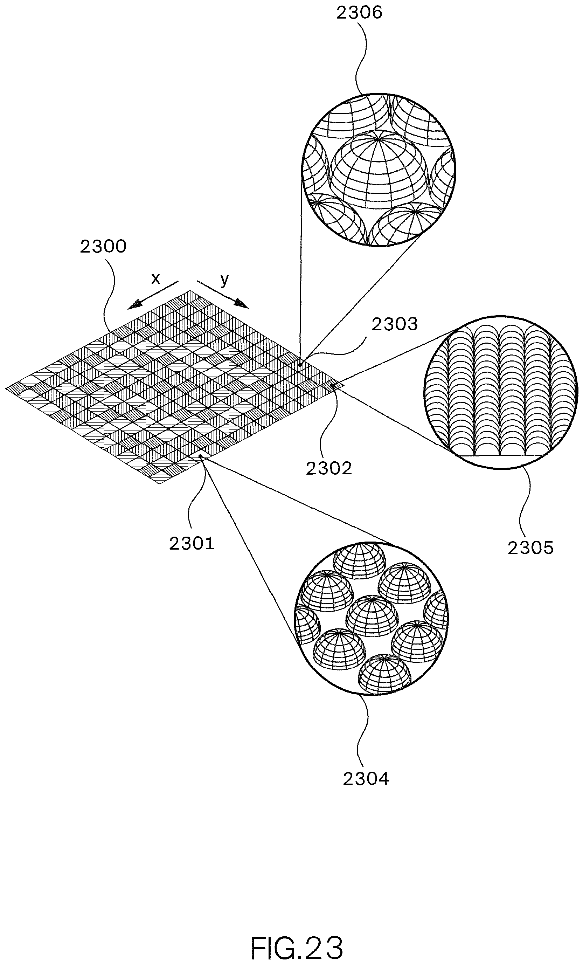

Referring now to **Fig. 23**, this schematically represents a topography raster **2300** with raster cells, e.g., **2301, 2302, 2303** that indicate a type of surface structure to be engraved at a position (x, y) on the embossing tool surface, whereby each type of surface structure corresponds to an image raster of image pixels (e.g., code raster, first image raster, ...) not illustrated in **Fig. 23**. Surface structures **2304**, **2305**, and **2306** corresponding to raster cells **2301, 2302, 2303** respectively, may be different from each other, hence clearly indicating that they originate from different image rasters of image pixels. In the present example the surface structures **2304**, **2305**, and **2306** are spherical structures having different sizes and alignments on the surface depending on the image raster from which their planning originates.

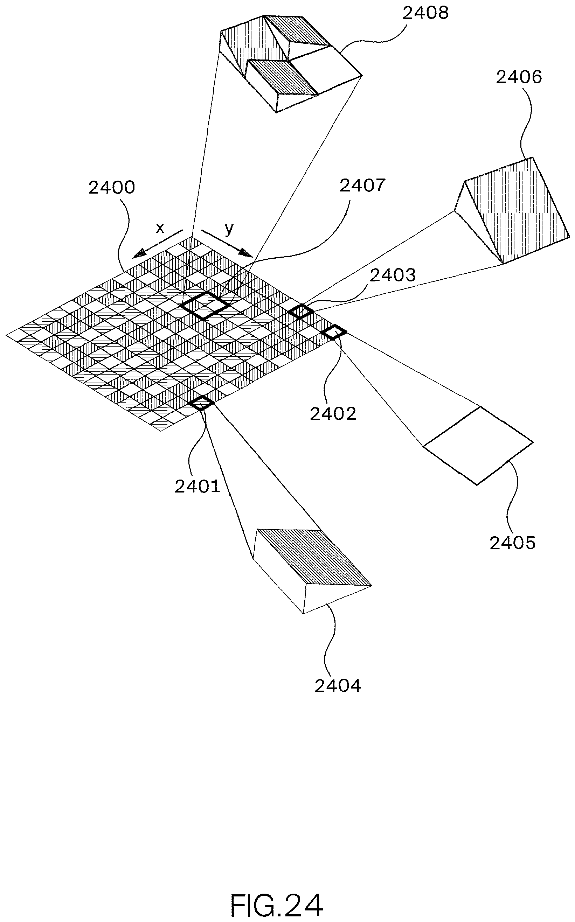

Referring now to **Fig. 24**, this schematically represents a topography raster **2400** with raster cells, e.g., **2401, 2402, 2403** that indicate a type of surface structure to be engraved at a position (x, y) on the embossing tool surface, whereby each type of surface structure corresponds to an image raster of image pixels (e.g., code raster, first image raster, ...) not illustrated in **Fig. 24**. Surface structures **2404**, **2405**, and **2406** corresponding to raster cells **2401, 2402, 2403** respectively, may be different from each other, hence clearly indicating that they originate from different image rasters of image pixels. In the present example the surface structures **2404** and **2406** are 3-dimensional triangular structures having different sizes and orientations on the surface depending on the image raster from which their planning originates, while surface structure **2405** corresponds to non-engraved surface represented as a white surface, whereby in this context non-engraved surface is meant to correspond to the original tool surface which may be polished. Further reference **2407** designates a group of 4 raster cells **2408**, each of which contains a surface structure that differs from the 3 other surface structures.

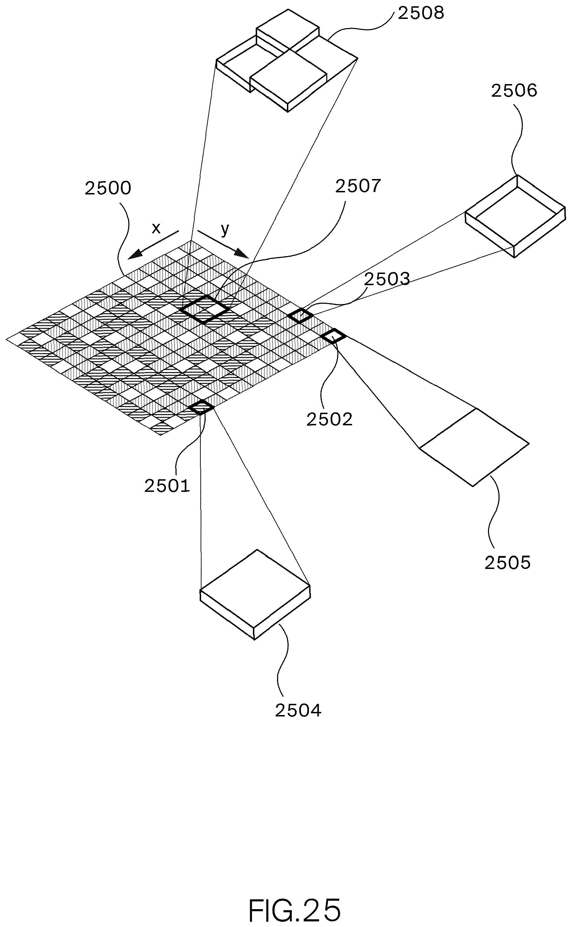

Referring now to **Fig. 25**, this schematically represents a topography raster **2500** with raster cells, e.g., **2501, 2502, 2503** that indicate a type of surface structure to be engraved at a position (x, y) on the embossing tool surface, whereby each type of surface structure corresponds to an image raster of image pixels (e.g., code raster, first image raster, ...) not illustrated in **Fig. 25**. Surface structures **2504**, **2505**, and **2506** corresponding to raster cells **2501**, **2502**, **2503** respectively, may be different from each other, hence clearly indicating that they originate from different image rasters of image pixels. In the present example the surface structures **2504** and **2506** are 3-dimensional rectangular structures having different sizes and orientations on the surface depending on the image raster from which their planning originates, the surface structure **2504** raising above a base level of the topography raster which corresponds to side **2509** of the surface structure, the surface structure **2506** penetrating below the base level of the topography raster, while surface structure **2505** corresponds to a polished surface represented as a white surface. Further reference **2507** designates a group of 4 raster cells **2508**, each of which contains a surface structure that differs from the 3 other surface structures.

### Overview of method for manufacturing an embossing tool

The method for manufacturing an embossing tool is described in its individual steps and embodiment in the chapters herein above.

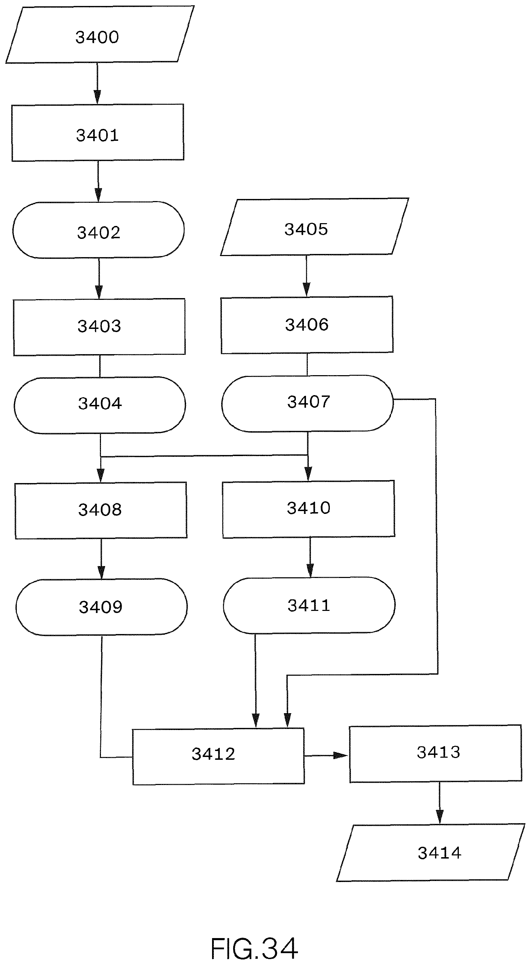

Referring now to **Fig. 34**, this illustrates a flowchart of the method for manufacturing an embossing tool with a code-containing topography according to an embodiment of the invention, whereby the topography is configured to represent a combination of an image and an alphanumerical or graphical information, the topography comprising a plurality of surface structures distributed according to a topography raster having a determined resolution, on the embossing tool surface.

The method starts with the image **3400** that is submitted to a step of providing **3401** an image file **3402** of the image **3400** containing a raster of image pixels with a determined bit depth and an initial image resolution. The image file **3402** is transformed **3403** into a primary raster of image pixels **3404** with the determined resolution, wherein a bit depth of an image pixel in the primary raster of image pixels **3404** is 1. An alphanumerical or graphical information **3405** is input to a step of providing **3406** a code raster **3407** of image pixels, the code raster being made from code features of contiguous pixels in "1" state, the contiguous pixels being surrounded by pixels in "0" state. A first logical operation **3408** is applied to combine the code raster of image pixels **3407** and the primary raster of image pixels **3404** in order to obtain a first image raster of image pixels **3409** as a result. The first logical operation **3408** is as defined in chapters herein above of the present description. A second logical operation **3410** is applied to combine the first image raster of image pixels **3409** and the code raster of image pixels **3407** in order to obtain a second image raster of image pixels **3411**. The second logical operation **3410** is defined in chapters herein above of the present description. Follows a step of projecting **3412** the code raster of image pixels **3407**, the first image raster of image pixels **3409** and the second image raster of image pixels **3411** onto the embossing tool surface to obtain the topography raster of the locations on the embossing tool surface for the raster specific surface structures, whereby the projecting is defined in chapters herein above of the present description. Finally, the raster specific surface structures are engraved **3413** on the embossing tool **3414** surface at their respective obtained locations and hence obtain the code containing topography.

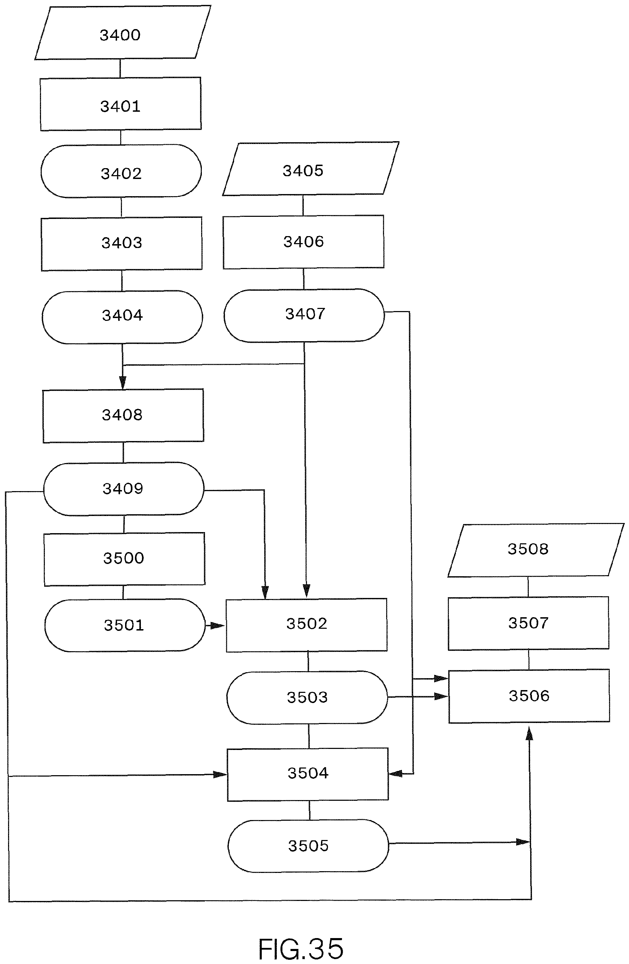

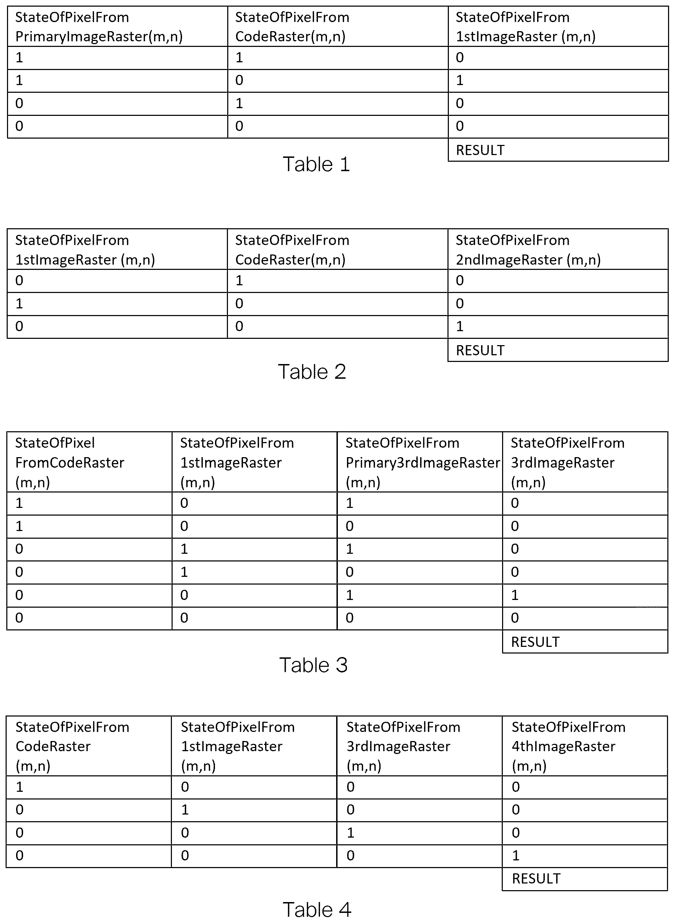

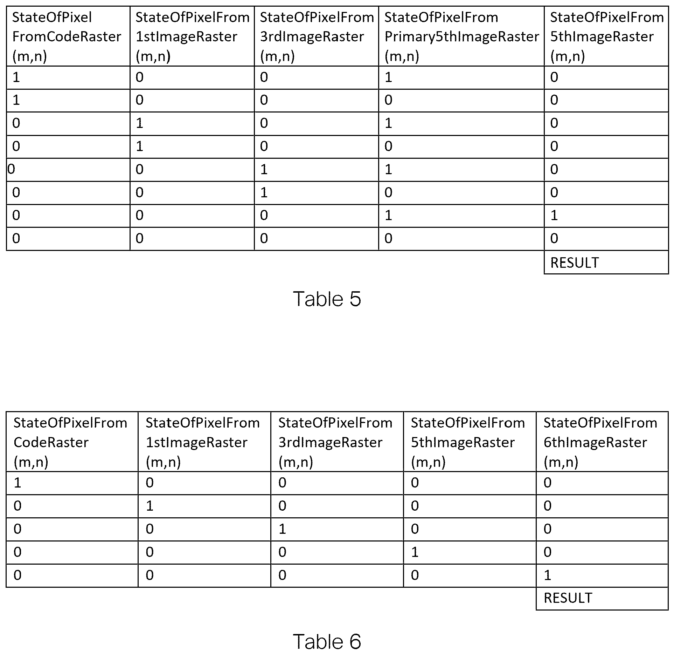

Referring now to **Fig. 35**, this illustrates a flowchart of the method according to a further aspect of the invention, for manufacturing an embossing tool with a code-containing topography, whereby the topography is configured to represent a combination of an image and an alphanumerical or graphical information, the topography comprising a plurality of surface structures distributed according to a topography raster having a determined resolution, on the embossing tool surface.

Similar as in **Fig. 34**, the method starts with the image **3400** that is submitted to the step of providing **3401** the image file **3402** of the image **3400** containing the raster of image pixels with a determined bit depth and the initial image resolution. The image file **3402** is transformed **3403** into the primary raster of image pixels **3404** with the determined resolution, wherein a bit depth of an image pixel in the primary raster of image pixels **3404** is 1. The alphanumerical or graphical information **3405** is input to the step of providing **3406** the code raster **3407** of image pixels, the code raster being made from code features of contiguous pixels in "1" state, the contiguous pixels being surrounded by pixels in "0" state. The first logical operation **3408** is applied to combine the code raster of image pixels **3407** and the primary raster of image pixels **3404** in order to obtain the first image raster of image pixels **3409** as a result. The first logical operation **3408** is as defined in chapters herein above of the present description. Thereafter, a first translation **3500** is applied to the first image raster of image pixels **3409** in order to obtain a primary third image raster of image pixels **3501**, whereby the first translation is defined in chapters herein above of the present description. Then a third logical operation **3502** is applied to combine the code raster of image pixels **3407**, the first raster of image pixels **3409** and the primary third image raster of image pixels **3501** to obtain a third raster of image pixels **3503**, whereby the third logical operation **3502** is defined in chapters herein above of the present description. Then a fourth logical operation **3504** is applied to combine the code raster of image pixels **3407**, the first raster of image pixels **3409** and the third image raster of image pixels **3503** to obtain a fourth raster of image pixels **3505,** whereby the fourth logical operation **3504** is defined in chapters herein above of the present description. Follows a step of projecting **3506** the code raster of image pixels **3407**, the first image raster of image pixels **3409**, the third image raster of image pixels **3503** and the fourth image raster of image pixels **3505** onto the embossing tool surface to obtain the topography raster of the locations on the embossing tool surface for the raster specific surface structures, whereby the projecting is defined in chapters herein above of the present description. Finally, the raster specific surface structures are engraved **3507** on the embossing tool **3508** surface at their respective obtained locations and hence obtain the code containing topography.

### Use of the invention

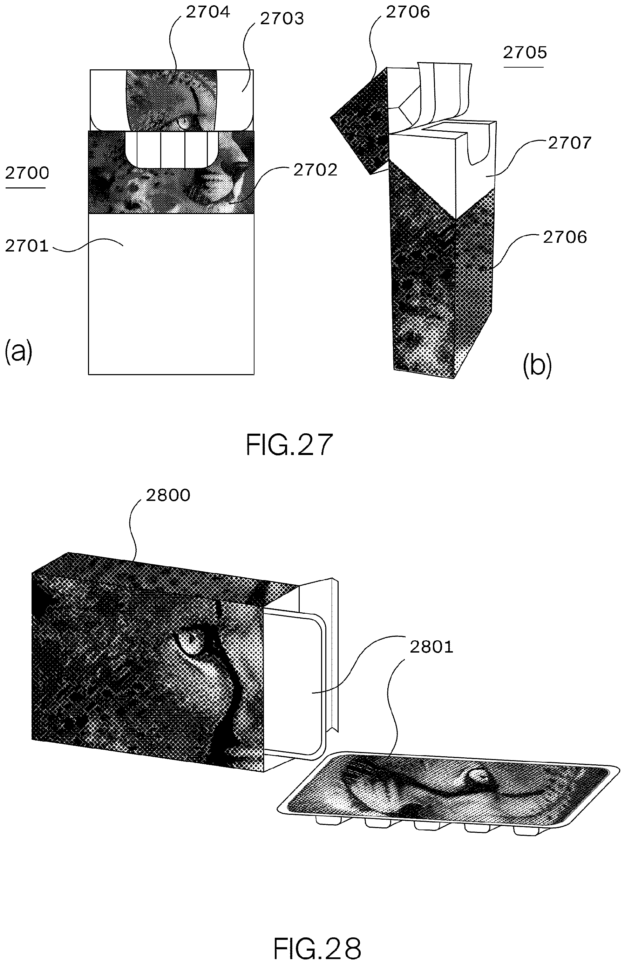

Possible uses of the invention described in the present application are depicted in illustration of embossed article in **Figs. 27** to **33****.** The denomination "use of the invention" refers here to products that have been embossed using the manufactured embossing tool according to the invention.

**Fig. 27(a)** illustrates a cigarette box **2700** comprising a case **2701** and an inner liner **2701** embossed with the code-containing topography. In this example a lid **2703** initially part of the inner liner **2701** is partly opened, which causes a part **2704** of the code-containing topography to be separated from a whole of the embossed code-containing topography.

**Fig. 27(b)** illustrates a further cigarette box **2705** comprising a case **2706** the outer visible surface of which is embossed with the code-containing topography. The further cigarette box **2705** also comprises an inner liner **2707.**

**Fig. 28** illustrates a box **2800**, the outer visible surface of which is embossed with the code-containing topography. The box **2800** is configured as a package for a plurality of blister trays **2801** in which e.g., pills or chewings gums may be packaged and covered by a blister film embossed with the code-containing topography.

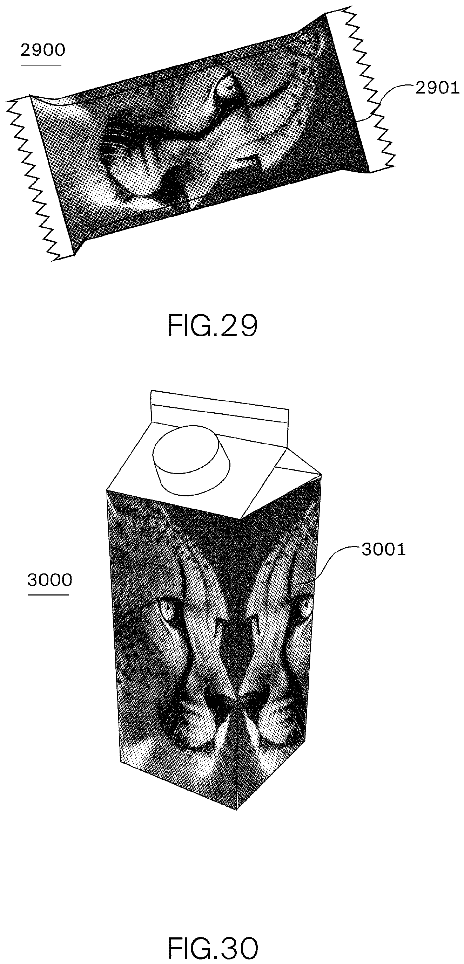

**Fig. 29** illustrates a foil package **2900** for containing for example a chocolate product or bakery product, the outer visible surface **2901** of which is embossed with the code-containing topography.

**Fig. 30** illustrates an example of a fluid container **3000** that may be employed to contain a drinkable fluid product, a part of the outer visible surface 3001 of which is embossed with the code-containing topography.

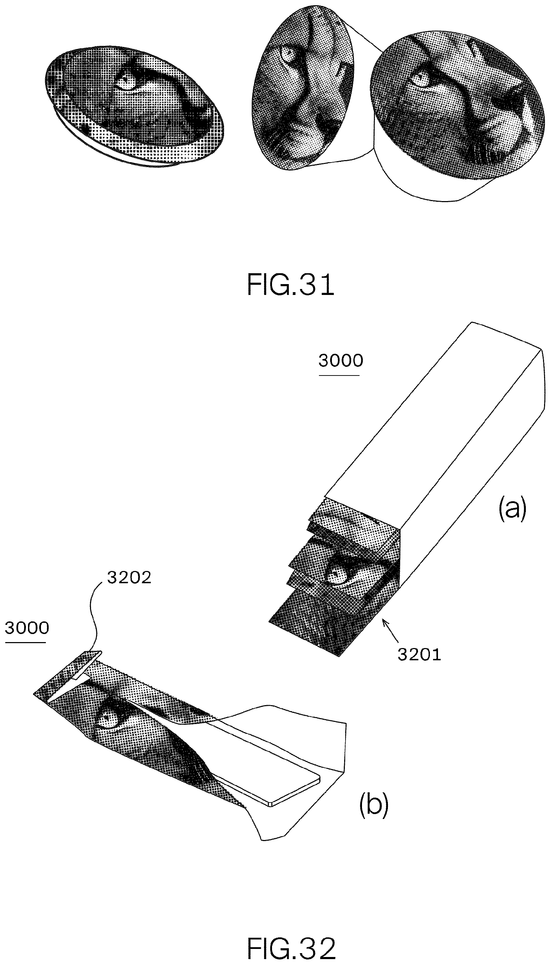

**Fig. 31** illustrate a plurality of example for powder capsules that may typically be used for coffee, chocolate of tea products, and are sealed by a foil embossed with the code-containing topography.

**Fig. 32(a)** represents a package **3200** of individually wrapped chewing gum bars **3201.**

**Fig. 32(b)** represents one of the chewings gum bars 3201 and a foil wrapping **3202** partially opened / unfolded revealing the contained chewing gum bar. The foil wrapping **3202** comprises on its outer visible surface an embossing of the code-containing topography.

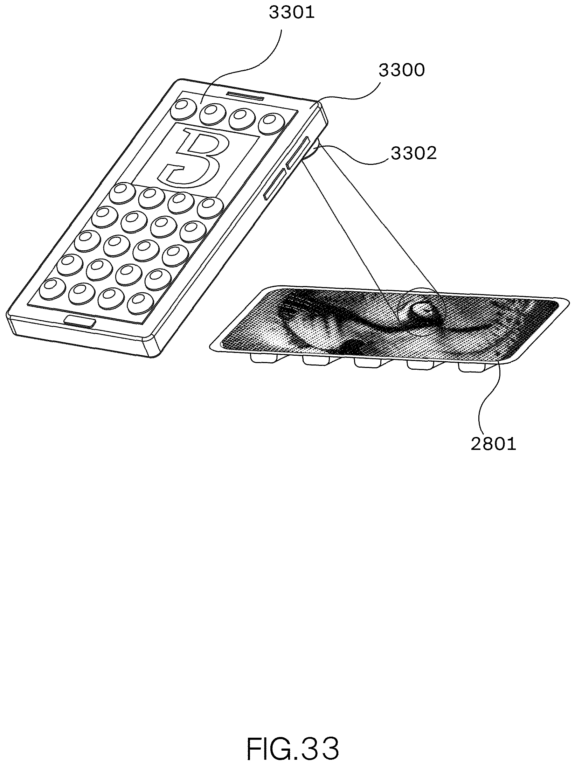

**Fig. 33** illustrates a reading-out of the code contained in the code-containing topography embossed in the covering foil of the blister package **2801**. The code is not visible to the eye on the foil, reason for which it doesn't appear on the foil in **Fig. 33**. A computerized reading device, e.g., a smartphone **3300** may be configured with a reading and decoding software (not illustrated) which analyzes a picture of light reflected from the foil into camera lens **3302** of the smartphone **3300**, and eventually displays information correlated to the code **3301** contained in the code-containing embossed topography on a screen of the smartphone **3300**, in the present case a monogram representing the letter "B".

### Glossary of terms

**transfer:** any one of for example, shaping, printing, molding, crafting, pressing, and embossing onto a substrate, of at least a three-dimensional topographical element formed on a solid piece;
**a foil:** designates metal foil, polymer foil, paper, laminated paper or hybrids, cardboard, or other thinsheet product, blank or coated with curable lacquers;
**a roller:** a tool characterized by a cylindrical symmetry, and dimensions of, for example, a length < 5 m, and a diameter < 1 m, profiled with surface structures on its lateral surface;
**structure(s):** surface topography feature(s) projecting from a mean surface, for example a mean surface of an embossing tool, having determined lateral dimensions and a determined height size between 0,1 µm and 1 mm, meant to be embossed into a foil;
**embossing:** the process of transferring structures from at least one roller or from a tool onto a foil, a viscous fluid or solid substrate or onto another solid piece;
**an embossing tool:** a material part having surface structures on at least one surface, the material being for example metal, ceramics, in bulk or layer form, and meant to transfer its surface structure onto another material by embossing;
**a polished material surface:** a surface that fails to comprise any microstructure(s), and may be considered substantially flat when looking at a plate-type embossing tool, and part of a cylindrical surface when looking at a roller-type embossing tool; preferably, the roughness (Ra) of a polished surface will be less than 50 nm;
**an image:** an artwork of substantially graphical kind, which may (but not limited to): (i) represent a scene (e.g., portrait, landscape, material objects) taken from the material environment, (ii) illustrate a graphic result of a computing device or software, (iii) depict an outcome of a hand-crafted painting or drawing;
**an image file:** a raster-like numerical transcription of an image, in the form of a computer file containing numerical values arranged according to a specific format;
**an image pixel:** the smallest addressable element of an image file, which can still be modified through software, and to whom specific values (e.g., geometrical shape, lateral size, color) can be assigned;
**an image resolution:** the ratio between the total number of pixels and the lateral dimension assigned to an image; typical values may lie between 100 and 3000 pixel /cm;
**an image raster:** a distinct set of raster-like image pixels belonging to an image file;
**an image raster resolution:** the specific image resolution corresponding to an image raster;
**a code:** an information, such as a string of alphanumeric characters or an image, possibly intended to be integrated in a code-containing topography;
**an encoding algorithm:** a specific operation transcribing a code into a corresponding code raster of image pixels;
**code reading:** a specific process of retrieving the encoded information from the embossed material carrying the embossed code-containing topography;
**a code file:** a computer file containing the numerical values corresponding to the positions in a code image of the features of a hidden code, arranged according to a specific format;
**a code raster:** the set of image pixels including the totality of image pixels situated in the image file at the positions of the code features;
**an orientation:** a preferential direction along which a family of substantially parallel grid-type structures are oriented; the orientation is referred to a chosen geometrical axis, e.g., the symmetry axis in the case of a roller;
**engraving:** any one of for example, carving, milling, chemical or plasma etching, laser ablating process of producing structures into a polished material surface.

## Claims

1. A method for manufacturing an embossing tool with a code-containing topography, whereby the topography is configured to represent a combination of an image and an alphanumerical or graphical information, the topography comprising a plurality of surface structures distributed according to a topography raster having a determined resolution, on the embossing tool surface, the method comprising:
providing an image file of the image containing a raster of image pixels with a determined bit depth and an initial image resolution,
transforming the image file (100, 101) into a primary raster of image pixels (300, 301) with the determined resolution, wherein a bit depth of an image pixel in the primary raster of image pixels is 1,
providing a code raster of image pixels for the alphanumerical or graphical information, with a bit depth 1 and with the determined resolution, the code raster being made from code features of contiguous pixels in "1" state, the contiguous pixels being surrounded by pixels in "0" state,
applying a first logical operation (500) to combine the code raster of image pixels (400, 401, 402) and the primary raster of image pixels (300, 301) in order to obtain a first image raster of image pixels (501) as a result, whereby the first logical operation (500) is defined by:
StateOfPixelFromlstlmageRaster (m,n) = StateOfPixelFromPrimarylmageRaster (m,n) AND (NOT( StateOfPixelFromCodeRaster (m.n) )),
whereby m and n are lines and column indices referencing a pixel in the raster of images pixels,
applying a second logical operation (601) to combine the first image raster of image pixels (501) and the code raster of image pixels (400, 401, 402) in order to obtain a second image raster of image pixels (600), whereby the second logical operation (601) is defined by:
StateOfPixelFrom2ndImageRaster (m,n) = NOT( StateOfPixelFrom1stImageRaster (m,n) OR StateOfPixelFromCodeRaster (m,n)),
whereby the code raster of image pixels, the first image raster of image pixels and the second image raster of image pixels respectively comprise pixels of bit depth 1, wherein for each raster, a "1"-state of the pixel indicates that a raster-specific surface structure for that raster is to be planned in the topography for a location on the embossing tool surface corresponding to a position (m,n) of the image pixel in the raster, whereas a "0"-state of the pixel indicates that no raster-specific surface structure for that raster is to be planned in the topography for a further location on the embossing tool surface corresponding to a further position of the image pixel in the raster,
projecting the code raster of image pixels, the first image raster of image pixels and the second image raster of image pixels onto the embossing tool surface to obtain the topography raster of the locations on the embossing tool surface for the raster specific surface structures, and
engraving on the embossing tool surface the raster specific surface structures at their respective obtained locations and hence obtain the code-containing topography.

2. A method for manufacturing an embossing tool with a code-containing topography, whereby the topography is configured to represent a combination of an image and an alphanumerical or graphical information, the topography comprising a plurality of surface structures distributed according to a topography raster having a determined resolution, on the embossing tool surface, the method comprising:
providing an image file of the image containing a raster of image pixels with a determined bit depth and an initial image resolution,
transforming the image file (100, 101) into a primary raster of image pixels (300, 301) with the determined resolution, wherein a bit depth of an image pixel in the primary raster of image pixels is 1,
providing a code raster of image pixels for the alphanumerical or graphical information, with a bit depth 1 and with the determined resolution, the code raster being made from code features of contiguous pixels in "1" state, the contiguous pixels being surrounded by pixels in "0" state,
applying a first logical operation (500) to combine the code raster of image pixels (400, 401, 402) and the primary raster of image pixels (300, 301) in order to obtain a first image raster of image pixels (501) as a result, whereby the first logical operation (500) is defined by:
StateOfPixelFromlstlmageRaster (m,n) = StateOfPixelFromPrimarylmageRaster (m,n) AND (NOT( StateOfPixelFromCodeRaster (m.n) )),
whereby m and n are lines and column indices referencing a pixel in the raster of images pixels,
applying a first translation to the first image raster of image pixels (501) in order to obtain a primary third image raster of image pixels (1103), whereby the first translation is defined by a first translation equation:
StateOfPixelOfPrimary3rdlmageRaster (m,n) = StateOfPixelFrom1stImageRaster (m-a,n-b) a and b corresponding to a translation vector in the raster,
the first translation equation being applied when m-a or n-b respectively correspond to indices of a pixel that is inside a range of the raster under consideration for the first translation, and
StateOfPixelOfPrimary3rdlmageRaster (m,n) = 0 if m-a or n-b respectively correspond to indices of a pixel that are out of a range of the raster under consideration for the translation,
applying a third logical operation (1101) to combine the code raster of image pixels (401), the first raster of image pixels (501) and the primary third image raster of image pixels (1103) to obtain a third raster of image pixels (1102), whereby the third logical operation (1101) is defined by:
StateOfPixelFrom3rdlmageRaster (m,n) = StateOfPixelFromPrimary3rdImageRaster (m,n) AND (NOT( StateOfPixelFromCodeRaster (m.n) AND StateOfPixelFrom1stImageRaster (m,n) ))
applying a fourth logical operation (1301) to combine the code raster of image pixels (401), the first raster of image pixels (501) and the third image raster of image pixels (1102) to obtain a fourth raster of image pixels (1302), whereby the fourth logical operation (1302) is defined by:
StateOfPixelFrom4thImageRaster (m,n) = NOT( StateOfPixelFromCodeRaster (m,n) OR StateOfPixelFrom1stImageRaster (m,n) OR StateOfPixelFrom3rdImageraster (m,n))
whereby the code raster of image pixels (401), the first image raster of image pixels (501), the third raster of image pixels (1102) and the fourth image raster of image pixels (1302) respectively comprise pixels of bit depth 1, wherein for each raster, a "1"-state of the pixel indicates that a raster-specific surface structure for that raster is to be planned in the topography for a location on the embossing tool surface corresponding to a position (m,n) of the image pixel in the raster, whereas a "0"-state of the pixel indicates that no raster-specific surface structure for that raster is to be planned in the topography for a further location on the embossing tool surface corresponding to a further position of the image pixel in the raster,
projecting the code raster of image pixels, the first image raster of image pixels, the third image raster of image pixels and the fourth image raster of image pixels onto the embossing tool surface to obtain the topography raster of the locations on the embossing tool surface for the raster specific surface structures, and
engraving on the engraving tool surface the raster specific surface structures at their respective obtained locations and hence obtain the code-containing topography.

3. The method of claim 2, further comprising after the first translation, at least steps of
applying at least a further translation and at least a further logical operation to obtain an (2i+1)-th image raster of image pixels and an (2i+2)-th image raster of image pixels by applying a general rule as follow, whereby "i" corresponds to the number of an i-th iteration:
StateOfPixelFrom(2i+1)ImageRaster (m,n) = StateOfPixelFromPrimary(2i+1)ImageRaster (m,n) AND (NOT( StateOfPixelFromCodeRaster (m.n) AND StateOfPixelFrom1stImageRaster (m,n) AND StateOfPixelFrom3rdImageRaster (m,n) AND ... AND StateOfPixelFrom(2i1)ImageRaster (m,n)))
the further logical operation being defined by:
StateOfPixelFrom(2i+2)ImageRaster (m,n) = NOT( StateOfPixelFromCodeRaster (m,n) OR StateOfPixelFrom1stImageRaster (m,n) OR StateOfPixelFrom3rdImageraster (m,n) OR ... OR StateOfPixelFrom(2i+21)ImageRaster (m,n) )
whereby all rasters of image pixels respectively comprise pixels of bit depth 1, wherein for each raster, a "1"-state of the pixel indicates that a raster-specific surface structure for that raster is to be planned in the topography for a location on the embossing tool surface corresponding to a position (m,n) of the image pixel in the raster, whereas a "0"-state of the pixel indicates that no raster-specific surface structure for that raster is to be planned in the topography for a further location on the embossing tool surface corresponding to a further position of the image pixel in the raster,
projecting all rasters of image pixels onto the embossing tool surface to obtain the topography raster of the locations on the embossing tool surface for the raster specific surface structures, and
engraving on the engraving tool surface the raster specific surface structures at their respective obtained locations and hence obtain the code containing topography.

4. The method according to anyone of claims 1 to 3, wherein
the embossing tool with a code-containing topography is a roller provided with a vacuum deposited coating of a thickness between 0,5 µm and 10 µm, exhibiting a hardness of 0,5 GPa to 5,0 GPa.

5. The method according to anyone of claims 1 to 3, wherein
the engraving on the embossing tool surface occurs by anyone of the techniques in the following list:
direct focusing of at least one laser beam onto the embossing tool surface,
mask projection onto the embossing tool surface,
chemical or plasma etching,
milling or fine grinding.

6. The method according to anyone of claims 1 to 3, wherein
the code information embossed onto surfaces using the embossing tool with a code-containing topography is readable and decodable with a decoding device.

7. The method according to anyone of claims 1 to 3, wherein
the code information embossed onto surfaces using the embossing tool with a code-containing topography is readable and decodable only under a determined view angle, obtained by a determined orientation of the code raster-specific surface structures.

8. The method according to anyone of previous claims, wherein
the raster-specific surface structures have lateral and height dimension in a range between 10 µm and 1 mm, and preponderantly influence on a visual aspect, on haptics, and on mechanical properties of the materials onto which they are embossed using the embossing tool with a code-containing topography.

9. The method according to anyone of claims 1 to 3, wherein
the raster-specific surface structures have lateral and height dimensions in a range between 1 µm and 100 µm and preponderantly influence the functionality of the surface onto which they are embossed using the embossing tool with a code-containing topography, modifying properties like wettability, haptics, heat or electric transfer, specular or diffuse reflection (mattifying).

10. The method according to anyone of claims 1 to 3, wherein
the raster-specific surface structures have lateral and height dimension in a range between 0,1 µm and 10 µm and preponderantly influence a reflection behavior of the surfaces onto which they are embossed using the embossing tool with a code-containing topography, generating holographic colors, diffraction patterns, view-angle dependent optical effects.

11. Use of an embossing tool with a code-containing topography manufactured according to the method of anyone of claims 1 to 3, for embossing a material in any one of scenarios is the following list:
on-line embossing of packaging material;
offline embossing of packaging material;
hot embossing of polymer-based and/or metallic films;
in extrusion coating lines;
in cast-and-cure or in UV or X-ray lacquer-based transfer methods;
in any kind of transfer technology, in which the code containing topography is transferred.

12. An embossing tool with a code-containing topography, whereby the topography is configured to represent a combination of an image and an alphanumerical or graphical information, the topography comprising a plurality of surface structures distributed according to a topography raster having a determined resolution, on the embossing tool surface,
whereby each of the surface structures is one from a determined set of surface structures, each one of surface structures from the determined set of surface being associated to a corresponding raster of image pixels at the determined resolution, at least one of the raster being representative of the alphanumerical or graphical information, and the remaining image rasters being the result of processing the image by at least one or more of a list comprising transformation, logical operation, translation, and the surface structures corresponding to an associated raster of image pixels having specific shape, size, orientation, scale parameter for the surface structures.

13. A device for manufacturing an embossing tool with a code-containing topography, whereby the topography is configured to represent a combination of an image and an alphanumerical or graphical information, the topography comprising a plurality of surface structures distributed according to a topography raster having a determined resolution, on the embossing tool surface, the device comprising:
a computer means configured to
provide an image file of the image containing a raster of image pixels with a determined bit depth and an initial image resolution,
transform the image file (100, 101) into a primary raster of image pixels (300, 301) with the determined resolution, wherein a bit depth of an image pixel in the primary raster of image pixels is 1,
provide a code raster of image pixels for the alphanumerical or graphical information, with a bit depth 1 and with the determined resolution, the code raster being made from code features of contiguous pixels in "1" state, the contiguous pixels being surrounded by pixels in "0" state,
apply a first logical operation (500) to combine the code raster of image pixels (400, 401, 402) and the primary raster of image pixels (300, 301) in order to obtain a first image raster of image pixels (501) as a result, whereby the first logical operation (500) is defined by:
StateOfPixelFromlstlmageRaster (m,n) = StateOfPixelFromPrimarylmageRaster (m,n) AND (NOT( StateOfPixelFromCodeRaster (m.n))),
whereby m and n are lines and column indices referencing a pixel in the raster of images pixels,
applying a second logical operation (601) to combine the first image raster of image pixels (501) and the code raster of image pixels (400, 401, 402) in order to obtain a second image raster of image pixels (600), whereby the second logical operation (601) is defined by:
StateOfPixelFrom2ndImageRaster (m,n) = NOT( StateOfPixelFrom1stImageRaster (m,n) OR StateOfPixelFromCodeRaster (m,n)),
whereby the code raster of image pixels, the first image raster of image pixels and the second image raster of image pixels respectively comprise pixels of bit depth 1, wherein for each raster, a "1"-state of the pixel indicates that a raster-specific surface structure for that raster is to be planned in the topography for a location on the embossing tool surface corresponding to a position (m,n) of the image pixel in the raster, whereas a "0"-state of the pixel indicates that no raster-specific surface structure for that raster is to be planned in the topography for a further location on the embossing tool surface corresponding to a further position of the image pixel in the raster,
projecting the code raster of image pixels, the first image raster of image pixels and the second image raster of image pixels onto the embossing tool surface to obtain the topography raster of the locations on the embossing tool surface for the raster specific surface structures, and
engraving means configured to engrave on the embossing tool surface the raster specific surface structures at their respective obtained locations and hence obtain the-code containing topography.
